(19) Europäisches Patentamt
European Patent Office
Office européen des brevets

(11) **EP 4 513 448 A1**

(12) **EUROPEAN PATENT APPLICATION**
published in accordance with Art. 153(4) EPC

(43) Date of publication:
**26.02.2025   Bulletin 2025/09**

(21) Application number: **23802729.6**

(22) Date of filing: **04.05.2023**

(51) International Patent Classification (IPC):
**G06V 20/20** (2022.01)

(52) Cooperative Patent Classification (CPC):
**G06T 15/00; G06V 10/82; G06V 20/20; G06V 20/64**

(86) International application number:
**PCT/CN2023/092023**

(87) International publication number:
**WO 2023/216957 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **11.05.2022   CN 202210508427**

(71) Applicant: **Huawei Technologies Co., Ltd.
Shenzhen, Guangdong 518129 (CN)**

(72) Inventors:
• **YU, Haixing
  Shenzhen, Guangdong 518129 (CN)**
• **ZHANG, Lei
  Shenzhen, Guangdong 518129 (CN)**
• **QIN, Rui
  Shenzhen, Guangdong 518129 (CN)**
• **LI, Jiangwei
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **TARGET POSITIONING METHOD AND SYSTEM, AND ELECTRONIC DEVICE**

(57)    This application provides a target localization method and system, and an electronic device. The method includes: A server receives a localization request sent by a first electronic device, where the localization request includes a to-be-processed image; the server recognizes a target in the to-be-processed image; the server searches a pose estimation model library for a target pose estimation model corresponding to the target, where the pose estimation model library includes pose estimation models respectively corresponding to a plurality of objects; the server obtains a pose of the target based on the to-be-processed image and the target pose estimation model; and the server sends the pose of the target to the first electronic device.

FIG. 3

## Description

This application claims priority to Chinese Patent Application No. 202210508427.7, filed with the China National Intellectual Property Administration on May 11, 2022 and entitled "TARGET LOCALIZATION METHOD AND SYSTEM, AND ELECTRONIC DEVICE", which is incorporated herein by reference in its entirety.

## TECHNICAL FIELD

Embodiments of this application relate to the field of electronic technologies, and in particular, to a target localization method and system, and an electronic a device.

## BACKGROUND

With development of augmented reality (Augmented Reality) technologies, increasingly more AR products such as Huawei AR map emerge. In an AR scenario, recognition and spatial localization on an object in the real word are important bridges between the real world and the virtual world, and are also key technologies of digital twins (digital twins).
Currently, a three-dimensional recognition and tracking algorithm can be used to recognize and track only a predefined object, and cannot be used to instantly add a target object of interest in an online update manner. As a result, target objects that can be recognized and tracked three-dimensionally are limited, and a capability requirement of a digital twin system for sustainable data expansion and diversified and personalized recognition requirements of users cannot be met.

## SUMMARY

This application provides a target localization method and system, and an electronic device. In the method, a pose estimation model library in a server includes a plurality of pose estimation models, and a target corresponds to a pose estimation model. According to the method, when adding a localizable target, the server only needs to add, to the pose estimation model library, a pose estimation model corresponding to the target. This can meet a requirement of a user for expanding a quantity of targets online and greatly increase a quantity of localizable targets.
According to a first aspect, an embodiment of this application provides a target localization method, applied to a server. The method includes:

the server receives a localization request sent by a first electronic device, where the localization request includes a to-be-processed image;
the server recognizes a target in the to-be-processed image;
the server searches a pose estimation model library for a target pose estimation model corresponding to the target, where the pose estimation model library includes pose estimation models respectively corresponding to a plurality of objects;
the server obtains a pose of the target based on the to-be-processed image and the target pose estimation model; and
the server sends the pose of the target to the first electronic device.

**In** this embodiment of this application, after receiving a to-be-processed image sent by an electronic device, the server may recognize a target in the to-be-processed image, search the pose estimation model library for a target pose estimation model corresponding to the target, and then obtain a pose of the target based on the to-be-processed image and the target pose estimation model. The pose estimation model library in the server includes the pose estimation models respectively corresponding to the plurality of objects. According to the method, when adding a localizable target, the server only needs to add, to the pose estimation model library, a pose estimation model corresponding to the target. This can meet a requirement of a user for expanding a quantity of targets online and greatly increase a quantity of localizable targets.
With reference to the first aspect, in a possible implementation, before that the server searches a pose estimation model library for a target pose estimation model corresponding to the target, the method further includes:

the server receives a three-dimensional model that corresponds to the target and that is sent by a second electronic device;
the server renders the three-dimensional model corresponding to the target, to generate a plurality of training images; and
the server trains an initial pose estimation model based on the plurality of training images, to obtain the target pose estimation model.

In this embodiment of this application, the server may receive, from the electronic device, a three-dimensional model corresponding to the target, for example, a computer-aided design model or a point cloud model of the target, and further generate, based on the three-dimensional model, a pose estimation model corresponding to the target, namely, the target pose estimation model. In the method, the user may send, to the server via the electronic device, a three-dimensional model of a target that the user is interested in, so that the server implements a function of localizing the target. According to the method, a requirement of the user for expanding a quantity of targets online can be implemented, and a quantity of targets that can be localized by the server can be greatly increased.

In a possible implementation, a localization application is installed on the electronic device, and the user may send, to the server via the localization application, a three-dimensional model corresponding to a target. The server may receive three-dimensional models that correspond to the target and that are sent by different electronic devices, and generate a plurality of pose estimation models corresponding to the target, so that the target is localized when a specific electronic device needs to localize the target.

With reference to the first aspect, in a possible implementation, that the server recognizes a target in the to-be-processed image includes:

the server extracts a feature vector from the to-be-processed image;
the server searches a feature vector library for a feature vector having a highest similarity to the extracted feature vector, where the feature vector library includes feature vectors respectively corresponding to identifiers of the plurality of objects; and
the server determines the target based on an identifier corresponding to the found feature vector.

In a possible implementation, the server may first determine, from the to-be-processed image, an image block including the target, and then extract a feature vector from the image block. According to the method, recognition interference from an object other than the target in the to-be-processed image can be avoided, thereby improving accuracy of target recognition.

With reference to the first aspect, in a possible implementation, the target pose estimation model includes a key point recognition model and a perspective-n-point algorithm, and that the server obtains a pose of the target based on the to-be-processed image and the target pose estimation model includes:

the server inputs the to-be-processed image into the key point recognition model, to obtain two-dimensional coordinates of at least four key points corresponding to the target;
the server determines three-dimensional coordinates of the at least four key points based on the three-dimensional model corresponding to the target; and
the server obtains the pose of the target based on the two-dimensional coordinates and the three-dimensional coordinates of the at least four key points by using the perspective-n-point algorithm.

With reference to the first aspect, in a possible implementation, before that the server sends the pose of the target to the first electronic device, the method further includes:

the server reprojects, based on the pose of the target, the three-dimensional model corresponding to the target onto the to-be-processed image, to obtain a rendered image;
the server performs M optimization processes, where M is a positive integer, and the optimization process includes: the server calculates an optimized pose based on the rendered image and the to-be-processed image; and calculates a pose error based on the to-be-processed image and the optimized pose; and
when the pose error is less than a preset error value, the server updates the optimized pose to the pose of the target; or when the pose error is not less than a preset error value, the server updates the rendered image based on the optimized pose, and performs the optimization process. In this embodiment of this application, the server may optimize the pose by using the foregoing reprojection process, to improve localization accuracy.

With reference to the first aspect, in a possible implementation, before that the server receives a localization request sent by a first electronic device, the method further includes:

sending, to the first electronic device, the three-dimensional model corresponding to the target, where the three-dimensional model is used by the first electronic device to track the target based on the pose of the target.

In this embodiment of this application, after obtaining the three-dimensional model corresponding to the target, the server may send the three-dimensional model to the first electronic device. The first electronic device may store the three-dimensional model. Further, after receiving the pose of the target, the first electronic device does not need to obtain the three-dimensional model from the server, but directly obtains the three-dimensional model from a storage to track the target. In the method, the three-dimensional model is sent to the electronic device in advance. This can improve efficiency of tacking the target by the electronic device.

In a possible implementation, the server may alternatively track the target. For example, the electronic device may send each obtained image frame to the server. The server may perform target localization on key image frames, and further perform target tracking on an image between two key image frames based on a localization result of a target in a previous image frame in the two key image frames, where a method for localizing the target by the server may be consistent with the foregoing method for localizing the target by the electronic device, and a method for tracking the target by the server may be consistent with the foregoing method for tracking the target by the electronic device. Further, the server sends a tracking result of the target to the electronic device. According to a second aspect, an embodiment of this application provides a target localization method, applied to an electronic device. The method includes:

the electronic device obtains a to-be-processed image;
the electronic device sends a localization request to a server, where the localization request includes the to-be-processed image; the localization request is used to request to recognize a target in the to-be-processed image and obtain a first pose of the target in the to-be-processed image; and the first pose is obtained by the server based on a target pose estimation model that corresponds to the target and that is found from a pose estimation model library, and the pose estimation model library includes pose estimation models respectively corresponding to a plurality of objects;
the electronic device receives the first pose sent by the server;
the electronic device renders virtual information on the to-be-processed image based on the first pose; and
the electronic device displays a rendered image.

With reference to the second aspect, in a possible implementation, after that the electronic device receives the first pose sent by the server, the method further includes:

the electronic device obtains a current image frame, where the current image frame is an image obtained after the to-be-processed image is obtained; and
the electronic device determines a second pose of the target in the current image frame based on the current image frame, a three-dimensional model corresponding to the target, and the first pose.

With reference to the second aspect, in a possible implementation, before that the electronic device determines a second pose of the target in the current image frame based on the current image frame, a three-dimensional model corresponding to the target, and the first pose, the method includes:

the electronic device receives an identifier that is of the target and that is sent by the server; and
the electronic device obtains the three-dimensional model from a storage based on the identifier of the target, where the three-dimensional model is stored in the storage after being obtained by the electronic device from the server.

With reference to the second aspect, in a possible implementation, the determining a second pose of the target in the current image frame includes:

the electronic device performs N optimization processes, where N is a positive integer, and the optimization process includes: the electronic device calculates a pose correction amount based on an energy function, the three-dimensional model, and the second pose, updates the second pose based on the pose correction amount, and calculates an energy function value based on the energy function and a second pose; and
when the energy function value meets a preset condition, the electronic device outputs the second pose; otherwise, the electronic device performs the optimization process.

With reference to the second aspect, in a possible implementation, the energy function includes at least one of a gravity axis constraint term, a region constraint term, a pose estimation algorithm constraint term, or a regularization term constraint term, where the gravity axis constraint term is used to constrain an error of the second pose in a gravity axis direction; the region constraint term is used to constrain a contour error of the target in the second pose based on a pixel value of the current image frame; the pose estimation algorithm constraint term is used to constrain an error of the second pose based on an estimated pose, where the estimated pose is obtained based on the first pose and a pose that is of the electronic device and that is obtained based on a simultaneous localization and mapping algorithm; and the regularization term constraint term is used to constrain a contour error of the target in the second pose based on the three-dimensional model corresponding to the target.

In this embodiment of this application, the electronic device optimizes a tracking pose of the target by using the foregoing energy function, so that pose accuracy can be greatly improved.

With reference to the second aspect, in a possible implementation, before that the electronic device sends a localization request to a server, the method includes:

> the electronic device displays a user interface, where the user interface includes a register control; and
> when detecting a user operation for the register control, the electronic device sends, to the server, the three-dimensional model corresponding to the target.

With reference to the second aspect, in a possible implementation, the three-dimensional model is obtained by the electronic device by receiving an external input or is generated by the electronic device based on a user operation.

This embodiment of this application provides an example of a registration interface for registering a locatable target by the user. The user may send, to the server by performing an operation on the registration interface displayed on the electronic device, the three-dimensional model corresponding to the target, so that the server can generate, based on the three-dimensional model, a pose estimation model corresponding to the target. This can increase a quantity of recognizable targets.

According to a third aspect, this application provides a server. The server may include a memory and a processor. The memory may be configured to store a computer program. The processor may be configured to invoke the computer program, so that the server performs the method according to the first aspect or any one of the possible implementations of the first aspect.

According to a fourth aspect, this application provides an electronic device. The electronic device may include a memory and a processor. The memory may be configured to store a computer program. The processor may be configured to invoke the computer program, so that the electronic device performs the method according to the second aspect or any one of the possible implementations of the second aspect.

According to a fifth aspect, this application provides a computer program product including instructions. When the computer program product runs on an electronic device, the electronic device is enabled to perform the method according to the first aspect or any one of the possible implementations of the first aspect.

According to a sixth aspect, this application provides a computer program product including instructions. When the computer program product runs on an electronic device, the electronic device is enabled to perform the method according to the second aspect or any one of the possible implementations of the second aspect.

According to a seventh aspect, this application provides a computer-readable storage medium, including instructions. When the instructions are run on an electronic device, the electronic device is enabled to perform the method according to any one of the first aspect and the possible implementations of the first aspect.

According to an eighth aspect, this application provides a computer-readable storage medium, including instructions. When the instructions are run on an electronic device, the electronic device is enabled to perform the method according to any one of the second aspect and the possible implementations of the second aspect.

According to a ninth aspect, an embodiment of this application provides a target localization system. The target localization system includes a server and an electronic device. The server is the server described in the third aspect, and the electronic device is the electronic device described in the fourth aspect.

It may be understood that the server according to the third aspect, the electronic device according to the fourth aspect, the computer program product according to the fifth aspect and the sixth aspect, and the computer-readable storage medium according to the seventh aspect and the eighth aspect are all configured to perform the method provided in embodiments of this application. Therefore, for beneficial effects that can be achieved, refer to beneficial effects in a corresponding method. Details are not described herein again.

**BRIEF DESCRIPTION OF DRAWINGS**

> FIG. 1 is a diagram of an architecture of a target localization system according to an embodiment of this application;
> FIG. 2A is a diagram of a hardware structure of an electronic device 100 according to an embodiment of this application;
> FIG. 2B is a block diagram of a software structure of an electronic device 100 according to an embodiment of this application;
> FIG. 3 shows a target localization method according to an embodiment of this application;
> FIG. 4 is a diagram of a scenario according to an embodiment of this application;
> FIG. 5 is a flowchart of another target localization method according to an embodiment of this application;
> FIG. 6 is a diagram of a subject detection model according to an embodiment of this application;
> FIG. 7 is a diagram of determining an image block in which a target is located according to an embodiment of this application;
> FIG. 8 is a diagram in which a server stores data according to an embodiment of this application;

FIG. 9 is a flowchart of a target tracking method according to an embodiment of this application; and

FIG. 10A to FIG. 10D show user interfaces implemented on an electronic device according to an embodiment of this application.

## DESCRIPTION OF EMBODIMENTS

The following clearly describes the technical solutions in embodiments of this application in detail with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two. The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI) that is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

The following first describes technical terms used in embodiments of this application.

1. Definition of pose

A pose of an object includes a location and a posture of the object in a specific coordinate system, and may be described by using a relative posture of a coordinate system attached to the object.

For example, an object may be represented by using a coordinate system B attached to the object. In this case, a posture of the object relative to a coordinate system A is equivalent to a posture of the coordinate system B relative to the coordinate system A. For example, if a robot coordinate system F2 is established on a robot by using a fixed point as an origin, a posture of the robot relative to an environment coordinate system F0 is equivalent to a posture of the robot coordinate system F2 relative to the environment coordinate system F0.

The posture of the coordinate system B relative to the coordinate system A may be represented by using a rotation matrix R and a translation matrix T. The posture of the coordinate system B relative to the coordinate system A may be represented by $\left[{}_A^B R, {}_A^B T\right]$. In this case, the posture of the object relative to the coordinate system A may be represented by $\left[{}_A^B R, {}_A^B T\right]$. It should be noted that when the coordinate system A is the environment coordinate system F0, the pose of the object may be represented by $\left[{}_A^B R, {}_A^B T\right]$.

2. Simultaneous localization and mapping (Simultaneous Localization And Mapping, SLAM) algorithm

Currently, sensors based on the SLAM are mainly classified into two types: lidar SLAM (Lidar SLAM) and VSLAM (Visual SLAM). The lidar SLAM is based on point cloud information returned by a lidar, and the visual SLAM is based on image information returned by a camera.

3. Pixel coordinate system

The pixel coordinate system is a two-dimensional coordinate system. A unit of the pixel coordinate system is pixel. A coordinate origin O is in an upper left corner.

The pixel coordinate system may be established by using an upper left corner of an image as the origin O, and units of a horizontal coordinate u and a vertical coordinate v of the pixel coordinate system each are pixel. It may be understood that a horizontal coordinate u and a vertical coordinate v of a pixel in the image respectively indicate a column number and a row number of the pixel.

4. Perspective-n-point (Perspective-n-Point, PnP) algorithm

The PnP algorithm is a method for solving a 3D to 2D point pair motion, and is used to estimate a pose of an object based on n 3D spatial points and projection locations of the n 3D spatial points. The n 3D spatial points are points on the object, where n is a positive integer. The projection locations of the n 3D spatial points may be obtained based on a structured light system, and the projection locations of the n 3D spatial points may be represented by coordinates in a pixel coordinate system.

There are many methods used to solve the PnP problem, for example, P3P in which a pose is estimated by using three point pairs, direct linear transform (DLT), and EPnP. In addition, the PnP problem can be solved by constructing the least squares problem in a nonlinear optimization manner and performing iterations.

5. Three-dimensional model

The three-dimensional model may be a triangular grid model of an object, namely, a computer aided design (Computer Aided Design, CAD) model.

6. Rigid body

The rigid body is an object that has an unchanged shape and size and unchanged relative locations for internal points after a force is applied to the object in motion. Actually, an absolute rigid body does not exist, and is only an ideal model. This is because any object deforms more or less after a force is applied to the object, if the degree of deformation is extremely small relative to the geometric size of the object, the deformation can be ignored when the motion of the object is studied. A location of the rigid body in space is determined based on a spatial location of any point of the rigid body and a location of the rigid body that rotates around the point. Therefore, the rigid body has six degrees of freedom in space.

In embodiments of this application, a three-dimensional model of a target may be three-dimensional spatial data used to represent a rigid body, for example, a CAD model or a point cloud model of the rigid body.

To describe a target localization method provided in embodiments of this application more clearly and in detail, the following first describes a system architecture provided in embodiments of this application.

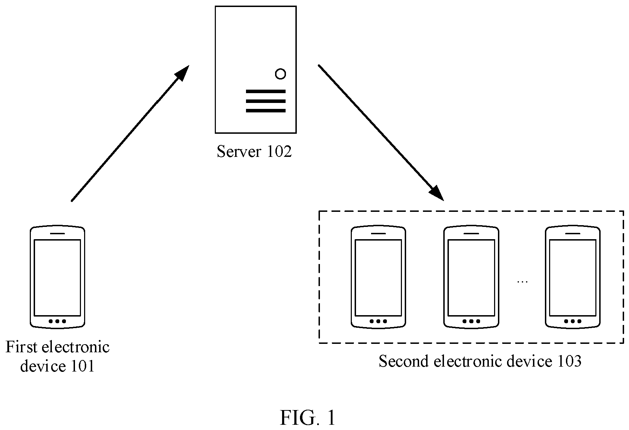

FIG. 1 is a diagram of an architecture of a target localization system according to an embodiment of this application. As shown in FIG. 1, the system may include a first electronic device 101, a server 102, and a second electronic device 103. The second electronic device 103 may include a plurality of electronic devices.

The first electronic device 101 is configured to register a recognizable target by a user. For example, the first electronic device may receive a registration operation input by the user, and send, to the server 102, a three-dimensional model corresponding to the target that the user wants to register. The first electronic device 101 may also include a plurality of electronic devices. For example, a plurality of users may separately send, to the server via different electronic devices, three-dimensional models corresponding to different targets.

The server 102 is configured to generate, based on the three-dimensional model corresponding to the target, a pose estimation model, a point cloud model, and a feature vector that correspond to the target, where the point cloud model is a model obtained after preset point cloud format conversion is performed on the three-dimensional model. The server 102 is further configured to localize a target in a to-be-processed image based on the three-dimensional model, the pose estimation model, and the point cloud model that correspond to the target. The server may be a cloud server, or may be an edge server.

The second electronic device 103 is configured to send the to-be-processed image to the server, and receive a pose that is of the target in the to-be-processed image and that is sent by the server; and may be further configured to track the target based on the pose of the target.

It should be noted that the first electronic device 101 and the second electronic device 103 may also be a same electronic device, that is, the electronic device has functions of the first electronic device 101 and the second electronic device 103. In other words, after the user registers the recognizable target with the first electronic device, the user may recognize and localize the target by using a target application of the first electronic device.

In some embodiments, the user may register the recognizable target via the first electronic device 101. For example, when detecting a user operation of registering the recognizable target, the first electronic device 101 send, to the server 102, the three-dimensional model corresponding to the target. The server 102 may generate, based on the three-dimensional model corresponding to the target, the pose estimation model, the point cloud model, and the feature vector that correspond to the target. Further, the server 102 may store the pose estimation model, the point cloud model, and the feature vector that correspond to the target, and send the point cloud model corresponding to the target to all second electronic devices 103 on which the target application is installed. The target application may be a Huawei AR map, a Cyberverse graffiti tool, a Cyberverse city clock-in/out application, or the like, and may be used for special effect display, virtual spraying, stylizing, or the like.

In this embodiment of this application, the user may recognize the target via the second electronic device 103. It is assumed that the target is an object registered with the server. In other words, the server includes the pose estimation model, the point cloud model, and the feature vector that correspond to the target. For example, the second electronic device 103 may send a recognition request to the server 102 when detecting the user operation for recognizing the target, where the recognition request may include the to-be-processed image. The server 102 generates, based on the three-dimensional model corresponding to the target, the pose estimation model, the point cloud model, and the feature vector that correspond to the target, and localizes the target in the to-be-processed image, to obtain the pose of the target. The server 102 may send the pose of the target to the second electronic device 103. Further, the second electronic device 103 may further track the target based on the pose of the target and the point cloud model corresponding to the target. In this embodiment of this application, the first electronic device 101 and the second electronic device 103 are electronic devices. The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, a smart city device, and/or the like.

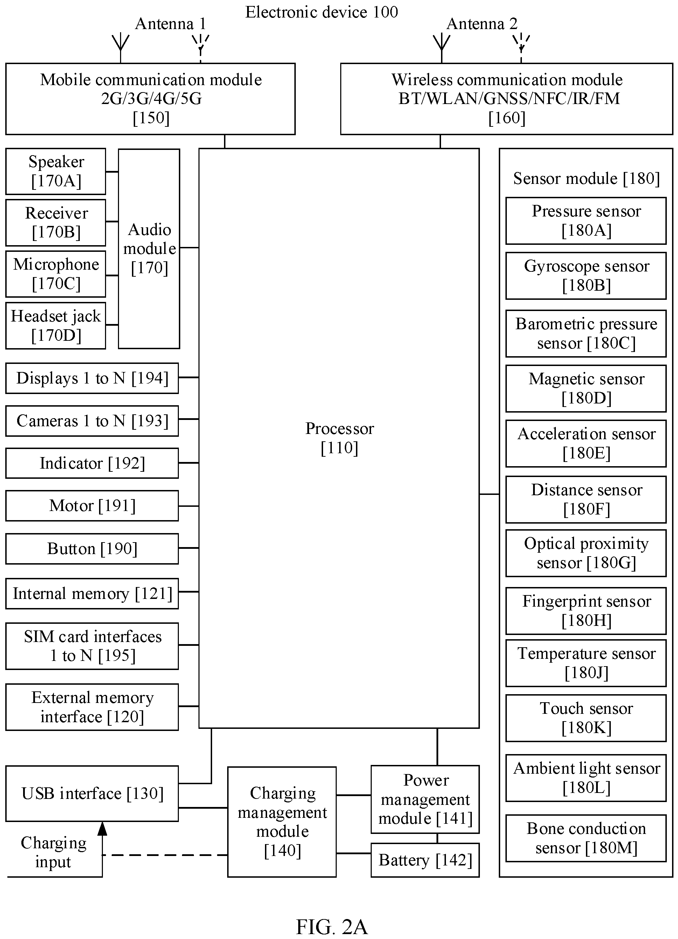

FIG. 2A is a diagram of an example of a hardware structure of an electronic device 100.

It should be understood that, the electronic device 100 may have more or fewer components than those shown in the figure, may combine two or more components, or may have a different component configuration. Components shown in FIG. 2A may be implemented by hardware, software, or a combination of hardware and software, including one or more signal processing and/or application-specific integrated circuits.

The electronic device 100 may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform the audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through the Bluetooth headset.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The GPIO interface may be configured by software. The GPIO interface may be configured for control signals or data signals. In some embodiments, the GPIO interface may be configured to connect the processor 110 to the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The SIM interface may be configured to communicate with the SIM card interface 195, to implement a function of transmitting data to an SIM card or reading data in an SIM card.

The USB interface 130 is an interface that complies with a USB standard specification, and may be specifically a mini USB interface, a micro USB interface, a USB Type-C interface, or the like. The USB interface 130 may be configured to connect to a charger to charge the electronic device 100, or may be configured to exchange data between the electronic device 100 and a peripheral device, or may be configured to connect to a headset, to play audio through the headset. The interface may be further configured to connect to another electronic device like an AR device.

It may be understood that an interface connection relationship between modules illustrated in this embodiment of this application is merely an example for description, and does not constitute a limitation on a structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger.

The power management module 141 is configured to connect the battery 142, the charging management module 140, and the processor 110. The power management module 141 receives an input of the battery 142 and/or the charging management module 140, and supplies power to the processor 110, the internal memory 121, the external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers the low-frequency baseband signal obtained through demodulation to the baseband processor for processing. The baseband processor processes the low-frequency baseband signal, and then transmits an obtained signal to the application processor. The application processor outputs a sound signal through an audio device (not limited to the speaker 170A, the receiver 170B, and the like), and displays an image or a video through the display 194. In some embodiments, the modem processor may be an independent component. In embodiments of this application, the modem processor may be independent of the processor 110, and is disposed in the same device with the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is an image processing microprocessor, and is connected to the display 194 and the application processor. The GPU is configured to: perform mathematical and geometric computation, and render an image. The processor 110 may include one or more GPUs, which execute program instructions to generate or change display information. The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini LED, a micro LED, a micro OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during image shooting, a shutter is pressed, a ray of light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100, for example, image recognition, facial recognition, speech recognition, and text understanding, can be implemented through the NPU.

The external memory interface 120 may be configured to be connected to an external memory card such as a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 runs the instructions stored in the internal memory 121 to perform various function applications of the electronic device 100 and data processing. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 100. In addition, the internal memory 121 may include a high-speed random access memory, and may further include a nonvolatile memory, for example, at least one magnetic disk storage device, a flash storage device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is further configured to convert an analog audio input into a digital audio signal. The audio module 170 may be further configured to code and decode audio signals. In some embodiments, the audio module 170 may be disposed in the processor 110, or some function modules of the audio module 170 may be disposed in the processor 110.

The speaker 170A, also referred to as a "loudspeaker", is configured to convert an audio electrical signal into a sound signal. The electronic device 100 may be configured to listen to music or answer a hands-free call by using the speaker 170A.

The receiver 170B, also referred to as an "earpiece", is configured to convert an audio electrical signal into a sound signal. When a call is answered or speech information is received by using the electronic device 100, the receiver 170B may be put close to a human ear to listen to a speech. The microphone 170C, also referred to as a "mike" or a "mic", is configured to convert a sound signal into an electrical signal. When making a call or sending speech information, a user may place the mouth of the user near the microphone 170C to make a sound, to input a sound signal to the microphone 170C. At least one microphone 170C may be disposed in the electronic device 100. In embodiments of this application, two microphones 170C may be disposed in the electronic device 100, to collect a sound signal and implement a noise reduction function. In embodiments of this application, three, four, or more microphones 170C may alternatively be disposed in the electronic device 100, to collect a sound signal, reduce noise, further identify a sound source, implement a directional recording function, and the like.

The headset jack 170D is configured to connect to a wired headset. The headset jack 170D may be the USB interface 130, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a change of the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation strength may correspond to different operation instructions. For example, when a touch operation whose touch operation strength is less than a first pressure threshold is performed on an SMS message application icon, an instruction for viewing an SMS message is executed; or when a touch operation whose touch operation intensity is greater than or equal to a first pressure threshold is performed on an SMS message application icon, an instruction for creating an SMS message is performed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during shooting. For example, when the shutter is pressed, the gyroscope sensor 180B detects an angle at which the electronic device 100 shakes, and calculates, based on the angle, a distance for which a lens module needs to compensate, so that the lens cancels the shake of the electronic device 100 through reverse motion, to implement image stabilization. The gyroscope sensor 180B may also be used in navigation and motion sensing game scenarios.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100, and may detect magnitude and a direction of gravity when the electronic device 100 is still. The acceleration sensor 180E may be further configured to recognize a posture of the electronic device, and is used in an application such as switching between a landscape mode and a portrait mode or a pedometer.

The distance sensor 180F is configured to measure a distance. The electronic device 100 may measure a distance through infrared or laser. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be configured to automatically unlock and lock a screen in a flip cover mode and a pocket mode.

The ambient light sensor 180L is configured to sense ambient light brightness. The electronic device 100 may adaptively adjust brightness of the display 194 based on the sensed ambient light brightness. The ambient light sensor 180L may be further configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application access locking, fingerprint-based photographing, fingerprint-based call answering, and the like. The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In embodiments of this application, when the temperature is lower than another threshold, the electronic device 100 heats the battery 142 to avoid abnormal shutdown of the electronic device 100 due to a low temperature. In some other embodiments, when the temperature is lower than still another threshold, the electronic device 100 boosts an output voltage of the battery 142 to avoid abnormal shutdown due to a low temperature.

The touch sensor 180K is also referred to as a touch panel. The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. Visual output related to the touch operation may be provided through the display 194. In embodiments of this application, the touch sensor 180K may also be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. For touch operations performed on different areas of the display 194, the motor 191 may also correspond to different vibration feedback effects. Different application scenarios (for example, time reminding, information receiving, an alarm clock, and a game) may also correspond to different vibration feedback effects. A touch vibration feedback effect may further be customized.

The indicator 192 may be an indicator light, may be configured to indicate a charging status and a power change, or may be configured to synthesize requests, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into the same SIM card interface 195 at the same time. The plurality of cards may be of a same type or different types. The SIM card interface 195 may be compatible with different types of SIM cards. The SIM card interface 195 is also compatible with an external memory card. The electronic device 100 interacts with a network through the SIM card, to implement functions such as conversation and data communication.

In embodiments of this application, the electronic device 100 may perform the target localization method by using the processor 110.

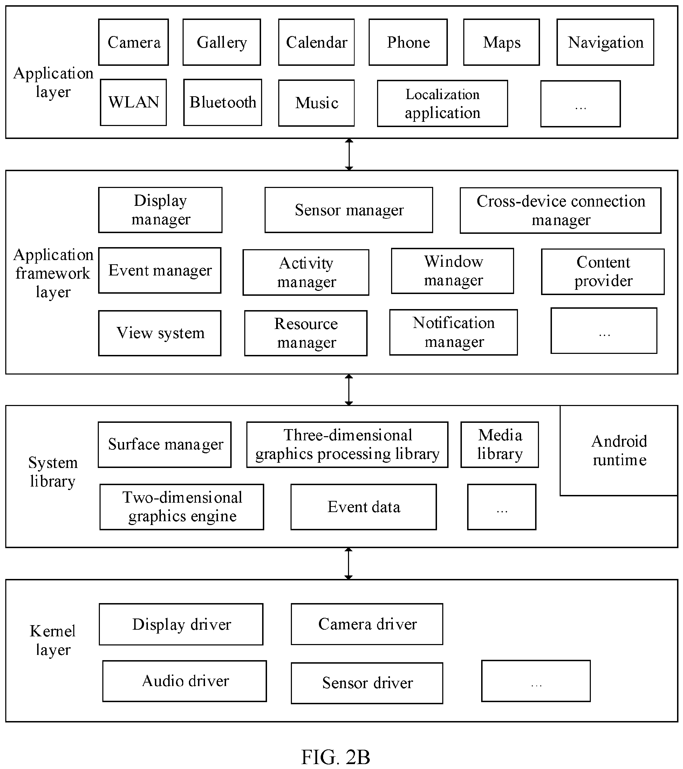

FIG. 2B is a block diagram of a software structure of an electronic device 100 according to an embodiment of this application.

In a layered architecture, software is divided into several layers, and each layer has a clear role and task. Layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2B, the application package may include applications such as Camera, Gallery, Calendar, Phone, Maps, Navigation, WLAN, Bluetooth, Music, Videos, Messages, and a target application (for example, a localization application).

In some embodiments, a user may send a CAD model of a target to a server through the target application, or may recognize, localize, and track the target through the target application. For specific content, refer to related descriptions below.

The application framework layer provides an application programming interface (application programming interface, API) and a programming framework for an application at the application layer. The application framework layer includes some predefined functions.

As shown in FIG. 2B, the application framework layer may include a display (display) manager, a sensor (sensor) manager, a cross-device connection manager, an event manager, an activity (activity) manager, a window manager, a content provider, a view system, a resource manager, a notification manager, and the like.

The display manager is used for display management of the system, and is responsible for management of all display-related transactions, including creation, destruction, direction switching, size and status change, and the like.

The sensor manager is responsible for sensor status management, and manages applications to listen to sensor events and report the events to the applications in real time.

The cross-device connection manager is configured to establish a communication connection to another device to share a resource.

The event manager is used for an event management service of the system, and is responsible for receiving events uploaded by the bottom layer and distributing the events to each window, to complete event receiving and distribution and the like.

The activity manager is configured to manage activity (Activity) components, including startup management, life cycle management, and activity direction management.

The window manager is configured to manage a window program. The window manager may obtain a size of the display, determine whether there is a status bar, perform screen locking, take a screenshot, and the like. The window manager is further configured to be responsible for window display management, including management associated with a window display manner, a display size, a display coordinate location, a display level, and the like.

For specific execution processes of the foregoing embodiments, refer to related content of the target localization method below.

The content provider is configured to store and obtain data and enable the data to be accessible to an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides, for an application, various resources such as a localized character string, an icon, an image, a layout file, and a video file.

The notification manager enables an application to display notification information in a status bar, and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is prompted in the status bar, a prompt tone is produced, the electronic device vibrates, or an indicator light blinks.

The Android runtime includes a kernel library and a virtual machine. The Android runtime is responsible for scheduling and management of the Android system.

The kernel library includes two parts: One part is a performance function that needs to be invoked by the Java language, and the other part is an Android kernel library.

The application layer and the application framework layer run in the virtual machine. The virtual machine executes Java files of the application layer and the application framework layer as binary files. The virtual machine is configured to implement functions such as object life cycle management, stack management, thread management, security and exception management, and garbage collection.

The system library (which may also be referred to as a data management layer) may include a plurality of function modules, for example, a surface manager (surface manager), a media library (Media Library), a three-dimensional graphics processing library (for example, OpenGL ES), a two-dimensional graphics engine (for example, SGL), and event data.

The surface manager is configured to manage a display subsystem and provide fusion of two-dimensional and three-dimensional layers for a plurality of applications.

The media library supports playback and recording of a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing.

The kernel layer is a layer between hardware and software. The kernel layer includes at least a display driver, a camera driver, an audio driver, and a sensor driver.

Based on the system architecture shown in FIG. 1 and the electronic device 100 shown in FIG. 2A and FIG. 2B, the target localization method provided in embodiments of this application is described.

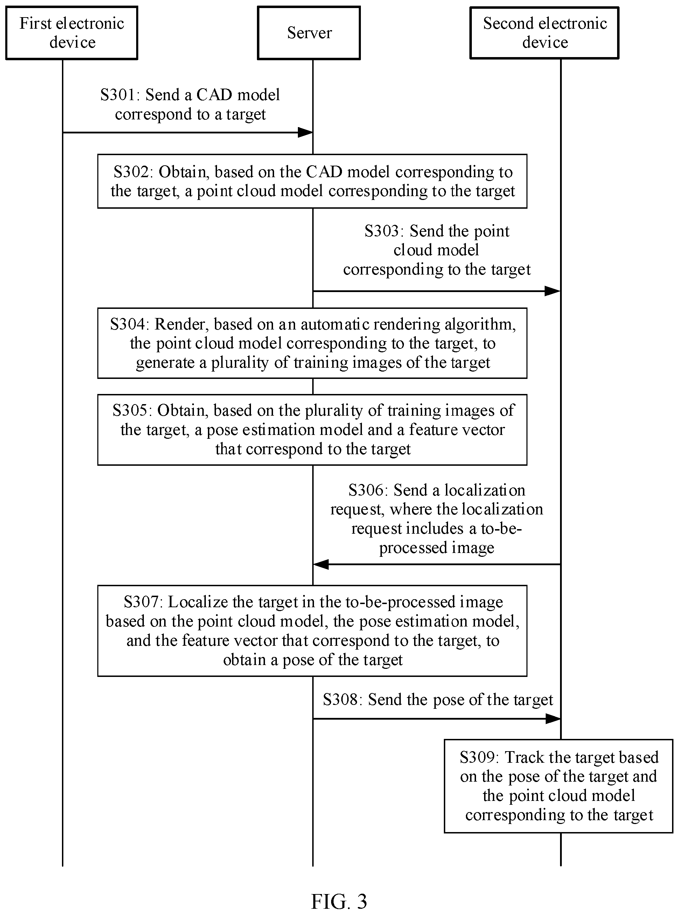

FIG. 3 shows a target localization method according to an embodiment of this application. It should be noted that, in embodiments of this application, either a first user operation or a second user operation may be a touch operation (for example, a tap operation, a touch and hold operation, a slide-up operation, a slide-down operation, or a side-slide operation) of a user, or may be a non-contact operation (for example, an air gesture), or may be a voice instruction of a user. This is not specifically limited in embodiments of this application.

As shown in FIG. 3, the method includes the following steps.

**S301: When detecting the first user operation, a first electronic device sends, to a server, a CAD model corresponding to a target.**

An object that needs to be localized is the target. The object may be a physical object, or may be a person, which is not limited herein. The CAD model may be spatial point cloud model data or mesh (mesh) model data. It should be noted that an object in embodiments of this application is usually a rigid body, for example, a stationary vehicle or a cultural relic in a museum.

In an implementation, a target application may be installed on the first electronic device, and the first electronic device may display a related user interface of the target application. For example, there is a control for confirming upload on the interface. When the first electronic device detects the first user operation of the user for the control, the first electronic device may send, in response to the first user operation of the user for the control, the CAD model corresponding to the target to the server. The CAD model corresponding to the target may be generated by the first electronic device. For example, the user generates the CAD model corresponding to the target by using the target application or another application. Alternatively, the CAD model corresponding to the target may be obtained by the first electronic device from another device. This is not limited herein. Optionally, the first electronic device may further send auxiliary information of the target to the server. The auxiliary information of the target may be information such as a name of the target or a feature of the target. The auxiliary information of the target may be used by the first electronic device to render virtual information on an image including a target.

For example, the user may draw a CAD model of a vehicle on the first electronic device. For example, when the first electronic device detects a drawing operation of the user, the first electronic device may generate the CAD model of the vehicle in response to the drawing operation of the user. The first electronic device may further send the CAD model of the vehicle to the server when detecting an operation that the user uploads the CAD model of the vehicle to the server. Optionally, the user may further send auxiliary information of the vehicle to the server, for example, information such as a vehicle length and a vehicle width. For example, when the first electronic device detects an operation that the user uploads the auxiliary information of the vehicle to the server, the first electronic device may send the auxiliary information of the vehicle to the server. Applications for generating the CAD model and sending the CAD model by the first electronic device may be a same application, or may be different applications.

It may be understood that the first electronic device may alternatively be a plurality of electronic devices. In other words, different users may separately send, to the server via different electronic devices, CAD models corresponding to targets that the users are interested in.

**S302: The server obtains, based on the CAD model corresponding to the target, a point cloud model corresponding to the target.**

In an implementation, the server receives the CAD model that corresponds to the target and that is sent by the first electronic device, and further converts the CAD model corresponding to the target into a preset point cloud data format, to obtain the point cloud model corresponding to the target. Optionally, the server may further process, based on a preset coordinate system, location information of the point cloud model corresponding to the target.

Optionally, the server may further recognize noises in the point cloud model corresponding to the target, and further remove the noises in the point cloud model corresponding to the target.

Optionally, when obtaining the point cloud model corresponding to the target, the server may store the point cloud model in a storage. For example, the server may have a three-dimensional model library. After obtaining the point cloud model corresponding to the target, the server may store the point cloud model in the three-dimensional model library.

Optionally, the server may annotate the target, that is, determine an identifier of the target, so that the identifier of the target is associated with other data of the target, for example, the point cloud model and a feature vector. The identifier of the target may be an identification (Identification, ID) of the target, for example, a fine-grained category of the target. For example, the target is a vehicle, and an identification of the vehicle may be a name of the vehicle. For example, the server stores, in the three-dimensional model library, the point cloud model corresponding to the target. When receiving a request for searching for the point cloud model corresponding to the target, the server may search, based on the identifier of the target, the three-dimensional model library for the point cloud model corresponding to the target.

In some embodiments, the server may have different databases, for example, any one or more of a CAD model library or a point cloud model library. In this case, the server may store the received CAD model in the CAD model library, and store the point cloud model in the point cloud model library. Further, the server may obtain, from the database based on the identifier of the target, data corresponding to the target, for example, the point cloud model.

**S303: The server sends, to a second electronic device, the point cloud model corresponding to the target.**

The second electronic device may be one or more electronic devices.

In some embodiments, the second electronic device may be an electronic device on which the target application is installed. After obtaining the point cloud model corresponding to the target, the server may send the point cloud model corresponding to the target to all electronic devices on which the target application is installed.

In an implementation, the server may add a point cloud model of a localizable object that is in the second electronic device without user awareness. It may be understood that, after obtaining the point cloud model corresponding to the target, the server sends the point cloud model corresponding to the target to the second electronic device, and then the second electronic device may store the point cloud model. In this case, when the target needs to be tracked, the point cloud model may be directly obtained from the storage. This improves tracking efficiency.

It should be noted that the first electronic device and the second electronic device may alternatively be a same electronic device.

**S304: The server renders, based on an automatic rendering algorithm, the point cloud model corresponding to the target, to generate a plurality of training images of the target.**

The automatic rendering algorithm may use a neural rendering (Neural rendering) technology.

In an implementation, the server may use the point cloud model corresponding to the target as an input, select different field of view poses, and simulate different background environments to render the point cloud model, to generate rendered images with pose labels, and obtain the plurality of training images. The generated rendered images with the pose labels may have different illuminations and different backgrounds, or may have different illuminations but a same background, or may have a same illumination but different backgrounds, which is not limited herein. The field of view pose and the background environment may be preset data.

**S305: The server obtains, based on the plurality of training images of the target, a pose estimation model and the feature vector that correspond to the target.**

In some embodiments, after obtaining the pose estimation model and the feature vector that correspond to the target, the server may store the pose estimation model and the feature vector in the storage. For example, the server has a feature vector retrieval library and a pose estimation model library. After obtaining the pose estimation model corresponding to the target and the feature vector corresponding to the target, the server may separately store the pose estimation model corresponding to the target and the feature vector corresponding to the target in the pose estimation model library and the feature vector retrieval library.

In an implementation, the server may train an original pose estimation model based on the plurality of training images, that is, perform network parameter tuning (finetune) on the original pose estimation model by using the plurality of training images, to obtain the pose estimation model corresponding to the target. The server may extract a feature vector from the training images via a feature extractor, to obtain the feature vector corresponding to the target. It may be understood that the target is in a one-to-one correspondence with a trained pose estimation network.

The feature vector of the target extracted by the server may be obtained based on one or more of the training images. This is not limited herein. For detailed content of the feature extractor, refer to related content in the following.

Optionally, both the pose estimation model corresponding to the target and the feature vector corresponding to the target may be associated with the identifier of the target. In this case, the server may separately obtain, from the pose estimation model library and the feature vector retrieval library based on the identifier of the target, the pose estimation model corresponding to the target and the feature vector corresponding to the target.

S306: **The second electronic device sends a localization request to the server when detecting the second user operation, where the localization request includes a to-be-processed image.** In some embodiments, the second electronic device may send the to-be-processed image to the server when detecting the second user operation. For specific content of obtaining the to-be-processed image by the second electronic device, refer to related content of step S501.

**S307: The server localizes the target in the to-be-processed image based on the point cloud model, the pose estimation model, and the feature vector that correspond to the target, to obtain a pose of the target.**

In some embodiments, the server may extract a feature vector of the target in the to-be-processed image; obtain, based on the extracted feature vector, the feature vector corresponding to the target stored in the server; further, determine the identifier of the target based on the feature vector corresponding to the target; determine, based on the identifier of the target, the pose estimation model and the point cloud model that correspond to the target; and localize the target in the to-be-processed image based on the pose estimation model and the point cloud model that correspond to the target, to obtain the pose of the target.

For specific content of localizing the target by the server, refer to related content of step S503 to step S508.

**S308: The server sends the pose of the target to the second electronic device.**

In some embodiments, the server may send the identifier of the target and the pose of the target to the second electronic device.

Optionally, the server may further send the auxiliary information of the target to the second electronic device.

**S309: The second electronic device tracks the target based on the pose of the target and the point cloud model corresponding to the target.**

In some embodiments, the second electronic device stores the point cloud model corresponding to the target. In this case, after receiving the pose of the target and the identifier of the target, the second electronic device may search for, based on the identifier of the target, the point cloud model corresponding to the target, and may further track, based on the pose of the target and the point cloud model of the target, the target that is in the image and that is obtained after the to-be-processed image.

Optionally, the second electronic device may further display the auxiliary information of the target at a preset location of the target on a display. It may be understood that the image including the target and the auxiliary information of the target is a virtual reality image rendered after the second electronic device localizes the target, and the auxiliary information of the target displayed on the virtual reality image may also be referred to as virtual information. For example, the target is the vehicle, and the auxiliary information of the target is a contour line of the vehicle and introduction information of the vehicle. The second electronic device may render the contour line of the vehicle on a vehicle in the to-be-processed image, and render the introduction information of the vehicle at a location around the vehicle. It may be understood that both the contour line and the introduction information are virtual content rendered on the to-be-processed image, the contour line indicates the target, and the introduction information is used to introduce the recognized target. For another example, if the vehicle is a white vehicle, and a contour line in content information corresponding to the target is blue, a rendered blue line on a vehicle contour in an image displayed on the second electronic device is displayed.

In this embodiment of this application, the foregoing target localization method may be performed only by the electronic device. For example, the electronic device may generate, based on the CAD model corresponding to the target, the point cloud model, the pose estimation model, and the feature vector that correspond to the target, and localize the target based on the point cloud model, the pose estimation model, and the feature vector that correspond to the target. For example, the first electronic device may generate, based on the CAD model corresponding to the target, the point cloud model, the pose estimation model, and the feature vector that correspond to the target, and send the point cloud model, the pose estimation model, and the feature vector that correspond to the target to the second electronic device, the second electronic device may localize the target based on the point cloud model, the pose estimation model, and the feature vector that correspond to the target.

The following describes example of several application scenarios of target localization.

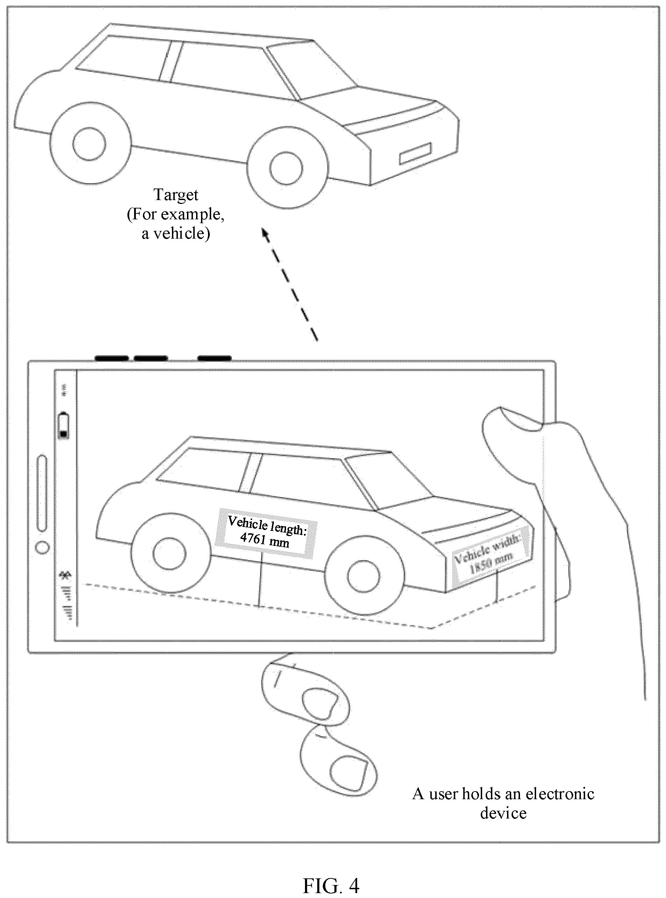

FIG. 4 is a diagram of a scenario according to an embodiment of this application. As shown in FIG. 4, the scenario includes a user, an electronic device, and a target. The user is a user of the electronic device, and the target is an object localized and tracked by the electronic device, for example, a vehicle. For example, the user may hold the electronic device to shoot the vehicle, and then the electronic device may localize the vehicle based on a shot image. Optionally, the electronic device may further implement any one or more functions of tracking the vehicle or rendering and displaying auxiliary information of the vehicle around the vehicle. As shown in FIG. 4, an image displayed by the electronic device is a rendered image, the rendered image has auxiliary information such as a vehicle width and a vehicle length around the vehicle, and display of the auxiliary information presents an AR effect.

In an AR scenario, the electronic device may localize and track the target, to display the auxiliary information of the target on a display of the electronic device. For example, in a museum scenario, the electronic device may be a mobile phone, the target may be a cultural relic in a museum, and the auxiliary information of the target may be introduction content of the cultural relic, for example, a name, a year, and a historical story of the cultural relic. Specifically, in a process of visiting cultural relics, if the user wants to learn detailed information of a cultural relic, the user may start a target application on the mobile phone, and point a camera at the cultural relic. Correspondingly, when the mobile phone detects this user operation of the user, the mobile phone may start, in response to the user operation of the user, the camera, shoot an image, and display the introduction content of the cultural relic at a location around the cultural relic.

In a VR scenario, the electronic device may localize and track the target, to display, in a virtual scenario, virtual content corresponding to the target. For example, in a VR game scenario, the electronic device may be VR glasses, the target may be another game user, and the virtual content corresponding to the target is a virtual image of the another game user in the game scenario. Specifically, the user may wear the VR glasses, and may watch a virtual immersive scenario, and the another game user is located in front of the user. Correspondingly, the VR glasses may shoot an image including the another game user, and then localize and track the another game user, to display the virtual image of the another game user in the game scenario.

It should be noted that the foregoing is merely an example of an application scenario provided in embodiments of this application. The target localization method provided in embodiments of this application may be further applied to another scenario. This is not limited herein.

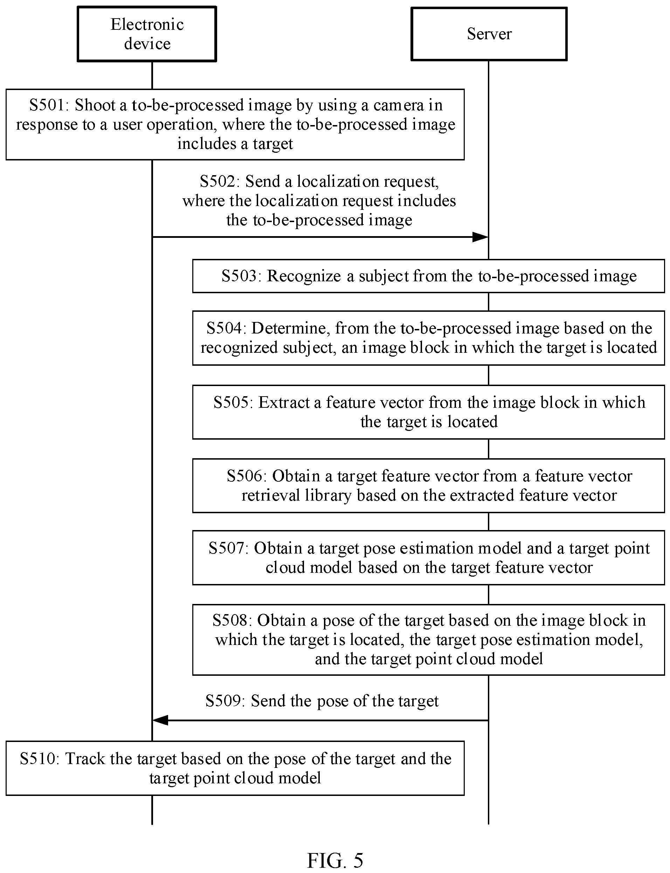

FIG. 5 is a flowchart of an example of another target localization method according to an embodiment of this application. It should be noted that the target localization method describes a specific implementation of recognizing and tracking a target. It may be considered that the embodiment shown in FIG. 5 is a specific implementation of step S306 to step S309 in FIG. 3.

It should be noted that in embodiments of this application, a user operation may be a touch operation (for example, a tap operation, a touch and hold operation, a slide-up operation, a slide-down operation, or a side-slide operation) of a user, or may be a non-contact operation (for example, an air gesture), or may be a voice instruction of a user. This is not specifically limited in embodiments of this application.

Refer to FIG. 5. The target localization method may include a part or all of the following steps. **S501: An electronic device shoots a to-be-processed image by using a camera in response to the user operation, where the to-be-processed image includes a target.**

It may be understood that, in different scenarios, the target may be different objects. For example, in a museum scenario, the target may be a cultural relic. In a VR game scenario, the target may be a game prop. The target is not limited herein. It should be noted that the to-be-processed image may include a plurality of objects. An object that needs to be localized is the foregoing target. The object may be a physical object, or may be a person. This is not limited herein. For example, there are many objects such as an object A, an object B, and an object C in the to-be-processed image, and a target that the user wants to recognize and localize is the object A. In this case, the object A is the foregoing target.

In some embodiments, a target application is installed on the electronic device. When the electronic device detects a user operation of the user for the target application, the electronic device may start, in response to the user operation, the camera to shoot the to-be-processed image. The target application may be a Huawei AR map, a Cyberverse graffiti tool, a Cyberverse city clock-in/out application, or the like, and may be used for special effect display, virtual spraying, stylizing, or the like. For example, the user holds the electronic device, faces the camera of the electronic device at the target, and inputs the user operation for the target application on the electronic device. Correspondingly, the electronic device starts the camera to shoot, to obtain the to-be-processed image including the target.

It should be noted that, in a video recording scenario, the electronic device may obtain a plurality of to-be-processed images. In this case, the electronic device may perform the target localization method provided in embodiments of this application on one or more of the to-be-processed images.

**S502: The electronic device sends a localization request to a server, where the localization request includes the to-be-processed image, and the localization request is used to request to localize the target in the to-be-processed image.**

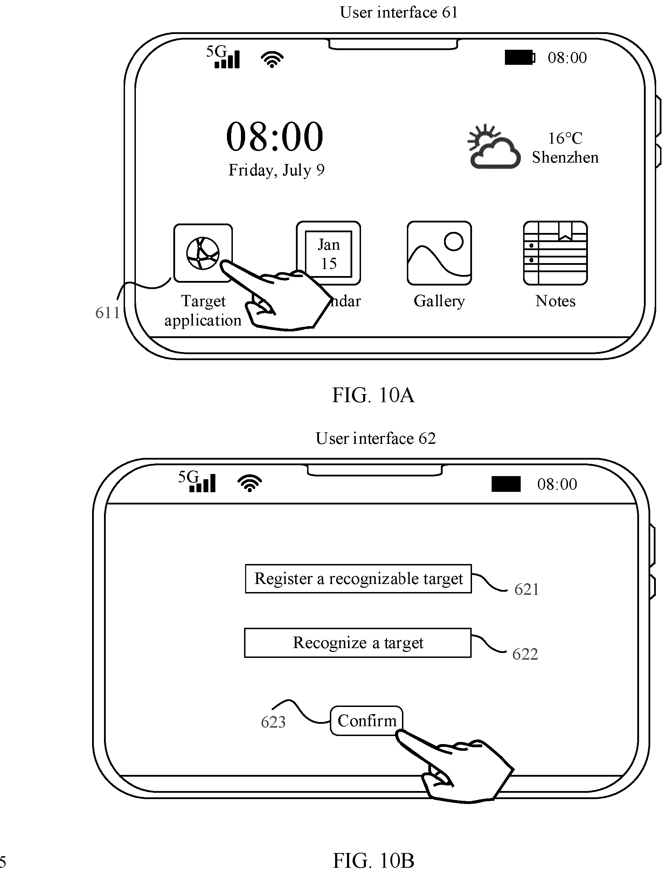

In some embodiments, the target application is installed on the electronic device. When the electronic device detects the user operation of the user for the target application, the electronic device may shoot, in response to the user operation of the user for the target application, the to-be-processed image by using the camera, and further send the to-be-processed image to the server. For example, the target application displays a user interface 62 shown in FIG. 10B. When the electronic device detects a user operation performed by the user on an option bar 622 and a confirm control 623, the electronic device may obtain the to-be-processed image in response to the user operation performed by the user on the target application, and send the to-be-processed image to the server.

**S503: The server recognizes a subject from the to-be-processed image.**

In some embodiments, after obtaining the to-be-processed image, the server may input the to-be-processed image into a subject detection model, to obtain a location of the target in the to-be-processed image. The subject detection model may be obtained through training based on a sample image and an annotated target. The location of the target in the to-be-processed image may be represented by using two-dimensional coordinates of a point corresponding to the target in a pixel coordinate system corresponding to the to-be-processed image. For example, the location of the target may be represented by using two-dimensional coordinates of an upper left corner and an upper right corner of a rectangle whose geometric center is the center of the target.

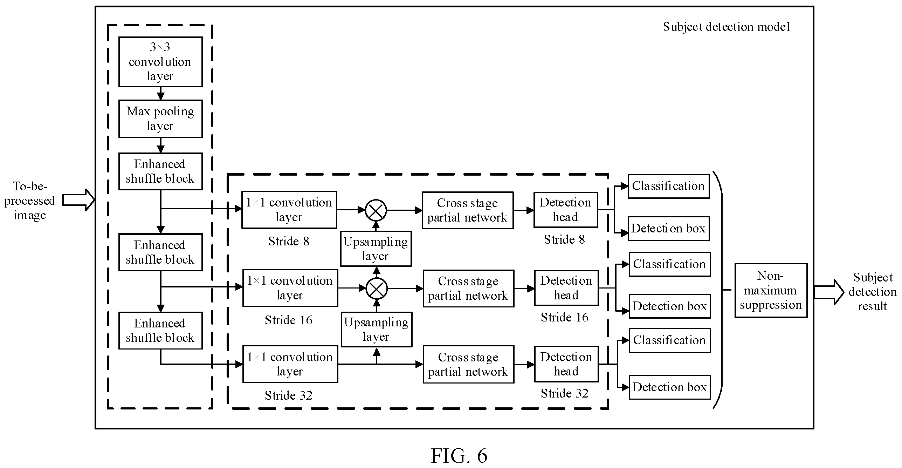

In an implementation, the subject detection model may use an enhanced shuffle network (Enhanced-ShuffleNet) as a backbone network, and use a cross stage partial path aggregation network (Cross-Stage-Partial Path-Aggregation Network, CSP-PAN) as a detection head. FIG. 6 is a diagram of a subject detection model according to an embodiment of this application. As shown in FIG. 6, the server may input the to-be-processed image into the subject detection model, where a first module in the subject detection model includes a $3 \times 3$ convolution layer ($3 \times 3$ Conv), a max pooling layer (Max Pool), and enhanced shuffle blocks (Enhanced Shuffle Blocks); a second module includes $1 \times 1$ convolution layers ($1 \times 1$ Conv) respectively with stride (Stride) 8, stride 16, and stride 32, upsampling layers (Upsample), cross stage partial (Cross Stage Partial, CSP) networks, and detection heads (Heads) respectively with stride (Stride) 8, stride 16, and stride 32; and finally, after the three channels of data are separately processed through classification (Classification) and detection boxes (Boxes), a subject detection result can be output through non-maximum suppression (Non-Maximum Suppression, NMS), that is, a subject is recognized.

Optionally, when the subject detection model is trained, an anchor free (anchor free) training policy may be used. A label distribution algorithm like SimOTA may be used as an annotation distribution mechanism, and a zoom loss function (Varifocal Loss) and a generalized intersection over union loss (Generalized Intersection over Union Loss, GIoU Loss) function may be used as loss functions. For example, a loss matrix is calculated by using a weighted combination of Varifocal Loss and GIoU Loss, the subject detection model is optimized by using the loss matrix, and the subject detection model is obtained when a loss meets a preset condition.

It should be noted that the subject detection model shown in FIG. 6 and the foregoing training method are implementations provided in embodiments of this application. Another neural network may alternatively be used as the subject detection model. The training method and the loss function may alternatively have other choices. This is not limited herein. For example, the server may alternatively determine an object with a largest area or an object at a focus in the to-be-processed image as the target. A method for recognizing the target by the server is not limited herein.

**S504: The server determines, from the to-be-processed image based on the recognized subject, an image block in which the target is located.**

In some embodiments, the server may capture, from the to-be-processed image based on the subject recognized from the to-be-processed image, the image block in which the target is located. It may be understood that subsequently, the server may localize the target based on the image block in which the target is located, so that impact of another object in the to-be-processed image on localizing the target can be avoided.

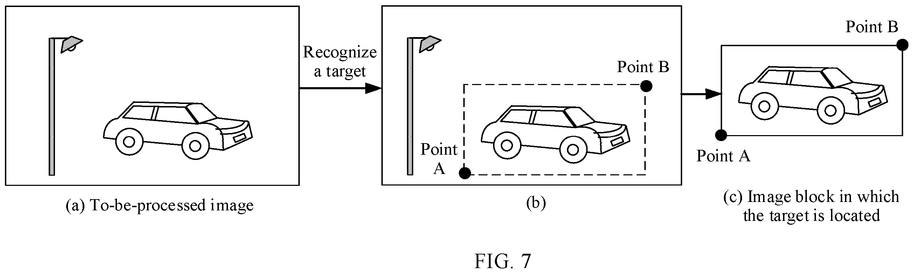

FIG. 7 is a diagram of determining an image block in which a target is located according to an embodiment of this application. As shown in FIG. 7, (a) in FIG. 7 shows a to-be-processed image, and the to-be-processed image includes a street lamp and a vehicle. It is assumed that the vehicle is the target, two-dimensional coordinates of a point A and a point B shown in (b) in FIG. 7 in a pixel coordinate system corresponding to the to-be-processed image may represent locations of subjects recognized by the server. In FIG. 7, black dots represent the point A and the point B. Further, the server may determine, based on the two-dimensional coordinates of the point A and the point B, the image block in which the target is located. The image block in which the target is located may be shown in (c) in FIG. 7.

**S505: The server extracts a feature vector from the image block in which the target is located.**

In some embodiments, the server may input the image block into a feature extractor to obtain the feature vector. The feature vector may be a 1024-dimensional feature vector, and the feature extractor may be obtained through training based on a sample image and an annotated feature vector.

The feature extractor may be a convolutional neural network (Convolutional Neural Network, CNN), or may be a transform neural network (Transformer). For example, the feature extractor may be a deep self-attention transform network (Vision Transformer, VIT), for example, VIT-16. This is not limited herein. It should be noted that the feature extractor may also be referred to as a feature extraction network.

Optionally, when training the feature extractor, the server may use a metric learning (Metric Learning) training policy, calculate a loss matrix by using an angular contrastive loss (Angular Contrastive Loss) function, and train the feature extractor based on the loss matrix, to obtain the feature extractor.

It should be noted that, in this embodiment of this application, the server may not perform step S504 and step S505. Instead, after recognizing the target from the to-be-processed image in step S503, the server directly extracts the feature vector from the to-be-processed image based on the location of the target, and then performs step S506. For example, any one or more of the image data or the location of the target may be used as an input of the feature extractor, to obtain the extracted feature vector. It may be understood that in step S505, the server extracts the feature vector from the image block in which the target is located, so that an error caused when the server extracts a feature vector for an object other than the target in the to-be-processed image can be avoided.

**S506: The server obtains a target feature vector from a feature vector retrieval library based on the extracted feature vector.**

In some embodiments, the server may search the feature vector retrieval library for a feature vector corresponding to the extracted feature vector, and the found feature vector is the target feature vector. For example, the server may obtain, from the feature vector retrieval library based on a cosine similarity algorithm, a feature vector having a maximum cosine similarity to the extracted feature vector, and determine the feature vector having the maximum cosine similarity to the extracted feature vector as the target feature vector. The feature vector retrieval library may include at least two feature vectors.

The target feature vector is a feature vector generated based on a three-dimensional model corresponding to the target. For example, if the user uploads the three-dimensional model corresponding to the target when registering the target, the server generates a training image based on the three-dimensional model corresponding to the target, generates, based on the training image, a feature vector corresponding to the target, and stores the feature vector corresponding to the target in the feature vector retrieval library.

It may be understood that although the target uploaded by the user and the target in the to-be-processed image are a same object, due to a difference in processes of obtaining feature vectors, feature vectors of a same object in the feature vector retrieval library may not be completely the same as the feature vectors extracted in step S505. Therefore, the server may use, as the target feature vector by using a related algorithm (for example, the foregoing cosine similarity algorithm), the feature vector that is in the feature vector retrieval library and that is closest to the feature vector extracted in step S505.

It may be understood that, to ensure that a retrieval vector corresponding to the target can be retrieved from the feature vector retrieval library by using the feature vector extracted by the server, a method for extracting the feature vector in the feature vector retrieval library may be the same as the method for extracting the feature vector in step S505 if the same feature extractor is used. In this embodiment of this application, the server may first perform normalization processing on the extracted feature vector, and then search the feature vector retrieval library for the target feature vector based on the feature vector obtained after the normalization processing. For example, the server may first perform L2 normalization (L2 Normalization) processing on the feature vector, obtain, from the feature vector retrieval library based on the cosine similarity algorithm, the feature vector having a maximum cosine similarity to the processed feature vector, and then uses the feature vector as the target feature vector. It should be noted that the normalization processing can improve data processing accuracy, and then, the server can find the target feature vector more accurately.

**S507: The server obtains a target pose estimation model and a target point cloud model based on the target feature vector.**

In some embodiments, the feature vector of the target corresponds to a pose estimation model and a point cloud model of the target. In this case, the server may obtain the pose estimation model and the point cloud model that correspond to the target feature vector, to obtain the target pose estimation model and the target point cloud model. For example, if the target feature vector is W, the server may obtain, from a pose estimation model library, a pose estimation model corresponding to W, and obtain, from a point cloud model library, a point cloud model corresponding to W, where the pose estimation model corresponding to W and the point cloud model corresponding to W are the target pose estimation model and the target point cloud model. In this embodiment of this application, the target has a unique identifier, and the identifier of the target corresponds to the feature vector, the pose estimation model, and the point cloud model of the target. In this case, the server may obtain the identifier of the target based on the target feature vector. The server may obtain the pose estimation model and the point cloud model that correspond to the identifier of the target, to obtain the target pose estimation algorithm model and the target point cloud model. The identifier of the target may be an ID of the target, for example, a fine-grained category of the target. For example, the target is a vehicle, and an identification of the vehicle may be a name of the vehicle.

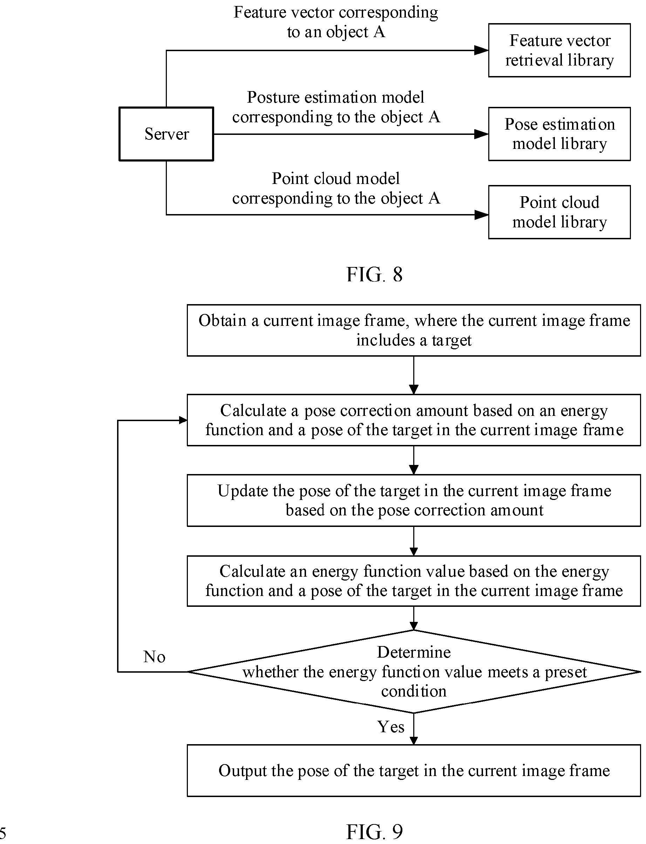

The target pose estimation model and the target point cloud model may be stored in the server, that is, the server may search stored data for the target pose estimation model and the target point cloud model. FIG. 8 is a diagram in which a server stores data according to an embodiment of this application. As shown in FIG. 8, the server may include the feature vector retrieval library, the pose estimation model library, and the point cloud model library. For example, after obtaining the feature vector, the pose estimation model, and the point cloud model of the object A, the server may separately store the feature vector, the pose estimation model, and the point cloud model of the object A in the feature vector retrieval library, the pose estimation model library, and the point cloud model library. In this case, the server may alternatively search, based on the identifier of the target, the feature vector retrieval library, the pose estimation model library, and the point cloud model library for the feature vector, the pose estimation model, and the point cloud model that correspond to the target.

**S508: The server obtains a pose of the target based on the image block in which the target is located, the target pose estimation model, and the target point cloud model.**

The target pose estimation model includes a key point recognition model and a PnP algorithm.

In some embodiments, the server may input the image block in which the target is located into the key point recognition model, to obtain locations of at least four key control points in the image block. The key point recognition model is used to obtain a location that is of a predefined key control point in the target point cloud model and that is in the image block, where the location of the key control point in the image block may be two-dimensional coordinates of the key control point in a pixel coordinate system corresponding to the image block in which the target is located. The server may determine a pose of the target in a camera coordinate system by using the pnp algorithm based on the locations of the at least four key control points in the target point cloud model, the locations of the at least four key control points in the image block, and device camera parameters, to obtain an initial pose of the target. Finally, the initial pose may be used as the pose of the target in the camera coordinate system.

The key point recognition model may be a pixel-wise voting network (Pixel-wise Voting Net, PVNet), or may be Efficient-PVNet obtained after PVnet is optimized by using an EffecientNet-b1 network structure, or may be another deep learning model. This is not limited herein. It should be noted that the key point recognition model may also be referred to as a key point regression neural network.

It should be noted that, in the conventional technology, PVNet may use a deep residual network (Deep residual network, ResNet) as a backbone (backbone) network, for example, ResNet-18. In a case of higher resolution, a fitting capability of PVNet is not ideal. In this embodiment of this application, Efficient-PVNet may be used as a key point recognition model. Because Efficient-PVNet is obtained after PVnet is optimized by using the EffecientNet-b1 network structure, a fitting capability of the network in the case of higher resolution (640*480) can be improved. In addition, in comparison with the conventional technology, Efficient-PVNet requires less computing power, has a faster speed, and has a stronger generalization capability.

In this embodiment of this application, the server may optimize the initial pose of the target, and use an optimized pose as the pose of the target in the camera coordinate system.

In an implementation, the to-be-processed image is a real RGB image. The server may reproject the target onto the real RGB image based on the initial pose, the target point cloud model, and a camera parameter, to obtain a rendered RGB image through rendering; separately determine feature points of several targets in the real RGB image and the rendered RGB image, and pair the feature points in the real RGB image and the feature points in the rendered RGB image one by one; further, based on a correspondence between a feature point in the rendered RGB image and a 3D point of the target point cloud model and a pairing relationship between a feature point in the real RGB image and a feature point in the rendered RGB image, determine two-dimensional coordinates of at least four feature points in the to-be-processed image and three-dimensional coordinates of the at least four feature points in the target point cloud model (namely, at least four 2D-3D matched point pairs); and finally, calculate an optimized pose based on the at least four 2D-3D matched point pairs and by using the PnP method, and use the optimized pose as the pose of the target in the camera coordinate system.

For example, a feature point M in the real RGB image and a feature point m in the rendered RGB image are two paired points, and the feature point m in the rendered RGB image and a 3D point N of the target point cloud model are two matched points. In this case, the feature point m in the rendered RGB image and the 3D point N of the target point cloud model may be a 2D-3D matched point pair.

A specific process in which the server separately determines the feature points of the several targets in the real RGB image and the rendered RGB image may include: first reprojecting the target onto the to-be-processed image based on the initial pose, the target point cloud model, and the camera parameter, to obtain an RGB image and a depth image through rendering; further, obtaining a bounding box of the target from the rendered RGB image by using the depth image as a mask; separately capturing image blocks from the real RGB image and the rendered RGB image based on the bounding box, to obtain two image blocks including the target; and by using a two-dimensional image feature extraction method, for example, a superpoint (Superpoint) feature or an image processing detection point (Oriented FAST and Rotated BRIEF, ORB) feature, extracting feature points and corresponding descriptors of the two image blocks including the target, and performing one-to-one matching.

Further, after obtaining the optimized pose, the server may further calculate a pose error between the optimized pose and the target in the real RGB image. When the pose error is not less than a preset error value, iterative optimization is performed on the optimized pose. For a specific optimization process, refer to the foregoing related content. When a pose error is less than the preset error value, a pose obtained through iterative optimization is used as the pose of the target in the camera coordinate system.

It may be understood that, during actual application, due to problems such as illumination, blocking, incomplete shooting of the target, and unclear edge contour, the initial pose of the target cannot ensure sufficient precision to support a subsequent 3D tracking procedure. In this embodiment of this application, secondary iterative optimization is performed on the initial pose, and in an iterative rendering manner, a reprojection error is calculated to update the pose, so that precision and accuracy of the pose of the target in the camera coordinate system can be improved.

**S509: The server sends the pose of the target to the electronic device.**

In some embodiments, the server sends the identifier of the target and the pose of the target to the electronic device, and the identifier of the target may be used by the electronic device to obtain the point cloud model corresponding to the target.

Optionally, the server renders the target in the to-be-processed image based on the pose of the target, and displays a rendered image. For example, a color is rendered on a housing of the vehicle, and a rendered image is displayed, so that the user can clearly see the recognized vehicle.

In some embodiments, the server further sends the auxiliary information of the target to the electronic device. In this case, the electronic device may receive the pose of the target and the auxiliary information of the target. After receiving the pose of the target, the electronic device may render the auxiliary information of the target in the to-be-processed image based on the pose of the target, and then display the rendered image.

**S510: The electronic device tracks the target based on the pose of the target and the target point cloud model.**

In some embodiments, the electronic device stores the target point cloud model. After receiving the pose of the target and the identifier of the target, the electronic device may search for the target point cloud model based on the identifier of the target, and then may track the target in the image obtained after the to-be-processed image based on the pose of the target and the target point cloud model.

The following provides an example of a target tracking method. Refer to FIG. 9. The method includes the following steps.

For ease of description, in the following, the pose of the target obtained by the server based on the foregoing pose estimation model is referred to as a localization pose, and a pose that is of the target in an image frame and that is obtained by the electronic device based on a pose of the target in a previous image frame is referred to as a tracking pose. It should be noted that, in a process of obtaining a plurality of images, when the electronic device localizes a target in an image, a localization pose in one image frame may be calculated every 100 frames, and for tracking of all frames between two times of localizing, a previous localization pose is used.

**S901: The electronic device obtains a current image frame, where the current image frame includes the target.**

It should be noted that tracking the target is to solve a pose of the target in each frame by using continuously obtained images including the target as an input during rigid body motion. The current image frame is an image frame in the continuously obtained images that include the target. In some embodiments, after receiving a localization pose that is of a first to-be-processed image frame and that is sent by the server, the electronic device may use a next shot image frame as the current image frame, or may use each image frame that is shot after the first to-be-processed image frame and that includes the target as the current image frame.

**S902: The electronic device calculates a pose correction amount based on an energy function and a pose of the target in the current image frame.**

In some embodiments, the electronic device may solve, based on the energy function and the pose $P_0$ of the target in the current image frame by using a Gaussian Newton method, an optimal correction amount corresponding to the current image frame. The pose $P_0$ of the target in the current image frame may be a pose of the target obtained through interpolation based on a tracking pose in an image frame previous to the current image frame and a current SLAM pose of the electronic device, where the SLAM pose is a current pose that is of the electronic device and that is obtained by the electronic device based on an SLAM algorithm in an environment coordinate system. During first optimization, a tracking pose in a previous to-be-processed image frame may be a localization pose of the target obtained by the server by performing S503 to step S508 on the previous image frame.

It should be noted that the electronic device may calculate a current pose of the electronic device in the environment coordinate system based on the SLAM algorithm.

The following describes an example of an energy function $E(\xi)$ provided in embodiments of this application.

First, a relationship between a parameter $\xi$ and a pose is described.

During rigid body motion, a relative pose of a target rigid body relative to the electronic device in the environment coordinate system currently may be represented by using a rotation component R and a displacement component T. In a projection imaging process of the electronic device, any two-dimensional pixel x imaged by the target in the electronic device may be considered as a point X in the point cloud model corresponding to the target, and is generated through pose transformation and projection transformation. In this case, a relationship is as follows:

$$x = \pi(RX + T)$$

Herein, x is a two-dimensional pixel point of a target object in an image, R is the rotation component, T is the component, and $\pi$ is projection transformation used for imaging and is a camera imaging model function by default.

In addition, because the rotation component R and the translation component T may be determined by a variable $\xi$ of six degrees of freedom, the foregoing formula is abbreviated as follows:

$$x(\xi) = f(\xi; X, \pi)$$

Therefore, the energy function $E(\xi)$ may use the parameter $\xi$ as a variable to represent the pose of the target.

The energy function $E(\xi)$ may be shown as follows:

$$E(\xi) = \lambda_1 E_{RBOT}(\xi) + \lambda_2 E_{cloudrefine}(\xi) + \lambda_3 E_{gravity}(\xi) + \lambda_4 E_{regular}(\xi)$$

Herein, $E_{gravity}(\xi)$ is a gravity axis constraint term; $E_{RBOT}(\xi)$ is a region constraint term; $E_{cloudrefine}(\xi)$ is a pose estimation algorithm constraint term; $E_{regular}(\xi)$ is a regularization term constraint term; $\lambda_1$, $\lambda_2$, $\lambda_3$, and $\lambda_4$ are weight coefficients of each item; and derivation and calculation may be performed on $\xi$ by using a corresponding method like a perturbation model in Lie algebra.

Formulas of each item may be shown as follows:

(1) The gravity axis constraint term may be shown as follows:

$$E_{gravity}(\xi) = \sum_{V1} \|(RV1)_z\|^2$$

Herein, $V1$ is three-dimensional coordinates of several sampling points randomly sampled on a circle that has a preset radius and uses an origin as a center on a cross section parallel to a horizontal plane in a three-dimensional coordinate system that is established by using a geometric center of the target as an origin; R is a rotation component to be optimized; and $(RV)_z$ is a z-axis component obtained after rotation transformation is performed on a sampling point, namely, a gravity axis direction component.

It should be noted that, for an object having a constant gravity axis direction (for example, a vehicle that does not need to consider a gravity axis reversal phenomenon), the foregoing gravity axis constraint term may be added to the energy function. The gravity axis direction is a direction vertical to the horizontal plane, and the object having a constant gravity axis direction is an object that does not reverse in the gravity axis direction. For example, in a normal case, if the vehicle does not have a posture of reversing in the gravity axis direction, it may be considered that the vehicle is the object having a constant gravity axis direction. For example, if a posture of a sphere in a rolling process usually reverses in the gravity axis direction, it may be considered that the sphere is not the object having a constant gravity axis direction.

(2) The pose estimation algorithm constraint term may be shown as follows:

$$E_{cloudrefine}(\xi) = \sum_{V} \|(R_{cloud}V2 + T_{cloud}) - (RV + T)\|^2$$

It should be noted that, V2 is a sampling point on the target; $R_{cloud}$, $T_{cloud}$ represents a target pose obtained through interpolation based on a current SLAM pose of the electronic device and a localization pose of an image frame previous to the current image frame; and $R$, $T$ is a to-be-optimized pose variable. It should be noted that the image frame previous to the current image frame is a previous image uploaded to the server for localizing, and may also be referred to as a key frame. An interval between key frames may be dynamically determined in combination with a load status of the server. For example, the key frames may be separated by dozens to hundreds of frames.

It may be understood that correcting the pose of the target by using the localization pose in the image frame previous to the current image frame can reduce an accumulated error, improve a continuous tracking capability of the algorithm, and improve robustness of the algorithm in a harsh illumination environment.

(3) The region constraint term $E_{RBOT}(\xi)$ may be shown as follows:

$$E_{RBOT}(\xi) = -\sum_{x\in\Omega} \log\left( H_e\left(\phi(x(\xi))\right) P_f\left(I(x)\right) + \left(1 - H_e\left(\phi(x(\xi))\right)\right) P_b\left(I(x)\right) \right)$$

Herein, $I$ represents the current image frame, y = $I(x)$ represents a pixel value (grayscale, RGB, or the like) at a location x on an image, $P_f(I(x))$ represents probability distribution of $I(x)$ in a foreground area, and $P_b(I(x))$ represents probability distribution of $I(x)$ in a background area. $\phi(x)$ is a signed distance function (signed distance function), which is specifically shown as follows:

$$d(x) = \min_{x_c \in C} |x - x_c|$$

$$\phi(x) = \begin{cases} -d(x) & \forall x \in \Omega_f \\ d(x) & \forall x \in \Omega_b \end{cases}$$

$$C = \{x \mid \phi(x) = 0\}$$

Herein, $\Omega_f$ represents the foreground area (namely, an area in which a target is located), $\Omega_b$ represents the background area, and C represents a contour of the target.

$H_e$ is a smooth step function (smooth step function), which is specifically shown as follows:

$$H_e\left(\phi(x)\right) = \frac{1}{\pi}\left(-\mathrm{atan}\left(s \cdot \phi(x)\right) + \frac{\pi}{2}\right)$$

Herein, s is a hyperparameter of the $H_e$ function, and may be set to 1.2.

The following provides an example of an implementation of determining a contour C of the target, where the electronic device may perform, by using a rendering tool, element-by-element rendering based on the pose $P_0$ of the target in the current image frame, the target point cloud data, and the camera imaging model function, to generate a depth image of the target object in a current field of view of the device; and then the contour of the target projected on the current image frame is obtained based on the depth image information used as the mask.

(4) The regularization term constraint term

$$E_{regular}(\xi) = \sum_{C,c} \|\pi(RC + T) - c\|^2$$

Herein, $c$ is a contour point of the target in the current image frame, and $C$ is a three-dimensional space point corresponding to the contour point of the target in the current image frame; and R and T are to-be-optimized pose rotation and translation components, and $\pi$ is the camera imaging model function. It may be understood that the contour point of the target is a sampling point on the contour of the target. For a specific obtaining method, refer to the foregoing related content. It should be noted that the energy function is used to ensure that a projection of a three-dimensional point of the contour after pose optimization does not differ greatly from a previous two-dimensional location, to ensure continuity of a change of the contour point.

**S903: The electronic device updates the pose of the target in the current image frame based on the pose correction amount.**

In some embodiments, the electronic device may update the pose of the target in the current image frame based on the pose correction amount.

**S904: The electronic device calculates an energy function value based on the energy function and the pose of the target in the current image frame.**

In some embodiments, after updating the pose in the current image frame, the electronic device may input the pose of the target in the current image frame into the energy function, to obtain the energy function value.

**S905: When the energy function value meets a preset condition, output the pose of the target in the current image frame; otherwise, perform steps S902 to S905.**

The preset condition may be that the energy function value is less than a preset threshold or a quantity of iterations reaches a predetermined quantity.

In some embodiments, the electronic device may use the pose of the target in the current image frame as the tracking pose of the target when the energy function value is less than the preset threshold or the quantity of iterations reaches the predetermined quantity; otherwise, steps S902 to S905 are performed to perform iterative optimization on the pose of the target in the current image frame until the tracking pose of the target is output.

In this embodiment of this application, the electronic device may track the target, and display the auxiliary information of the target on each image frame including the target. For example, the target is a vehicle, and the auxiliary information of the target is a vehicle model, a vehicle manufacturer, vehicle data, and the like. The electronic device may render the vehicle model, the vehicle manufacturer, the vehicle data, and the like in the to-be-processed image, for example, the vehicle model, the vehicle manufacturer, the vehicle data, and the like may be displayed around the vehicle. For example, in a video recording scenario, each image frame displayed by the electronic device has rendered auxiliary information. Display of the auxiliary information may present an AR effect.

In embodiments of this application, the server may alternatively track the target. For example, the electronic device may send each obtained image frame to the server. The server may perform target localization on key frame images, and the server may further perform target tracking on an image between two key frame images based on a localization result of a target in a previous image frame in the two key frame images, where a method for localizing the target by the server may be consistent with the foregoing method for localizing the target by the electronic device, and a method for tracking the target by the server may be consistent with the foregoing method for tracking the target by the electronic device. The server may send a tracking result of the target to the electronic device.

The following describes examples of some user interfaces of an electronic device when the electronic device performs the foregoing target localization method. FIG. 10A to FIG. 10D are user interfaces implemented on the electronic device.

FIG. 10A shows an example of a user interface 61 that is on a first terminal and that is used to display installed applications. As shown in FIG. 10A, the user interface 61 may include a status bar, a calendar indicator, a weather indicator, an icon 611 of a target application, an icon of a gallery application, an icon of another application, and the like. The status bar may include one or more signal strength indicators of a mobile communication signal (which may also be referred to as a cellular signal), one or more signal strength indicators of a Wi-Fi signal, a battery status indicator, a time indicator, and the like.

In some embodiments, the user interface 61 shown in FIG. 10A may be a home screen (home screen). It may be understood that FIG. 10A merely shows an example of a user interface of the electronic device, and should not constitute a limitation on this embodiment of this application. As shown in FIG. 10A, when the electronic device detects a user operation performed on the icon 611 of the target application, the electronic device may display a user interface 62 shown in FIG. 10B in response to the user operation.

Not limited to the home screen shown in FIG. 10A, a user may alternatively trigger, in another manner, the electronic device to display the user interface 62. This is not limited in this embodiment of this application. For example, the user may input a preset website address in an input box of a browser, to trigger the electronic device to display the user interface 62.

As shown in FIG. 10B, the user interface 62 may display an option bar 621, an option bar 622, and a confirm control 623. The option bar 621 is used by the user to register a recognizable target, and the option bar 622 is used by the user to recognize the target.

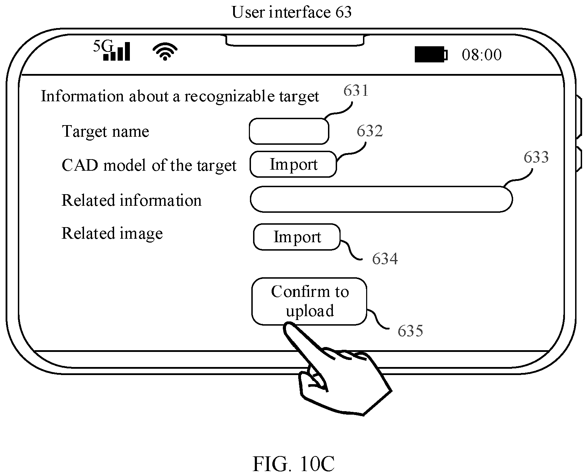

In some embodiments, the user may tap the option bar 621, and then tap the confirm control 623 as shown in FIG. 10B. Correspondingly, when the electronic device detects the user operation, the electronic device may display a user interface 63 shown in FIG. 10C in response to the user operation. Alternatively, the user may tap the option bar 621. Correspondingly, when the electronic device detects the user operation, the electronic device may display a user interface 63 shown in FIG. 10C in response to the user operation.

The user interface 63 may include a name input box 631, an import control 632, an information input box 633, an import control 634, and a confirm control 635. The name input box 631 is used to input a name of the target. The import control 632 is used to input a CAD model corresponding to the target. The information input box 633 is used to input information corresponding to the target. The import control 634 is used to input a related image of the target.

In an implementation, the user may tap the confirm control 635 after inputting data of the target on the user interface 63. Correspondingly, the electronic device detects the user operation, and uploads the input data of the target to a server in response to the user operation.

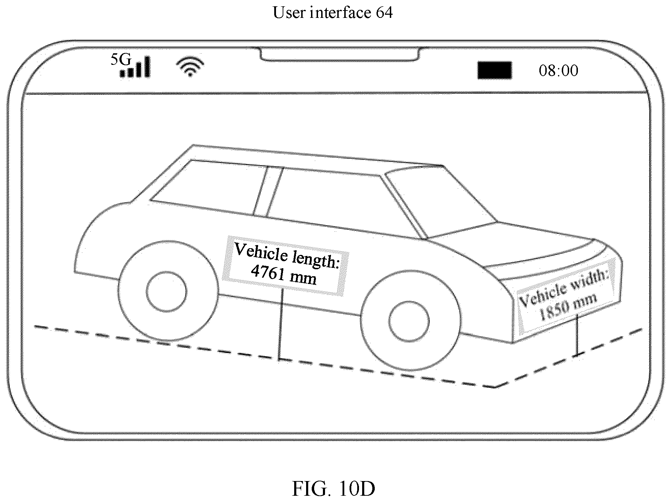

In this embodiment of this application, the user may tap the option bar 622, and then tap the confirm control 623 as shown in FIG. 10B. Correspondingly, when the electronic device detects the user operation, the electronic device may display a user interface 64 shown in FIG. 10D in response to the user operation. Alternatively, the user may tap the option bar 622. Correspondingly, when the electronic device detects the user operation, the electronic device may display a user interface 64 shown in FIG. 10D in response to the user operation.

The user interface 64 may display a shot image or an image obtained after the foregoing target localization method is performed on a shot image. FIG. 10D shows an example of an image rendered after a target is localized. A vehicle is the target. Displayed content such as a dashed line around the vehicle, a vehicle length, and a vehicle width is auxiliary information of the vehicle. It may be understood that the vehicle is real information in a shot image, the display content such as the dashed line around the vehicle, the vehicle length, and the vehicle width is virtual information rendered in a preset area around the target after the target is localized, and the virtual information is displayed only on a display of the electronic device and is not information in a real world.

It should be noted that the foregoing user interfaces are merely examples provided in this embodiment of this application, and should not constitute a limitation on embodiments of this application. In embodiments of this application, the user interfaces shown in FIG. 10C and FIG. 10D may be interfaces corresponding to different applications.

An embodiment of this application further provides an electronic device. The electronic device includes one or more processors and one or more memories, the one or more memories are coupled to the one or more processors, the one or more memories are configured to store computer program code, the computer program code includes computer instructions, and when the one or more processors execute the computer instructions, the electronic device is enabled to perform the method described in the foregoing embodiments.

An embodiment of this application discloses a computer program product including instructions. When the computer program product runs on an electronic device, the electronic device is enabled to perform the method described in the foregoing embodiments.

An embodiment of this application further provides a computer-readable storage medium, including instructions. When the instructions are run on an electronic device, the electronic device is enabled to perform the method described in the foregoing embodiments.

It can be understood that the various implementations of this application may be arbitrarily combined to achieve different technical effects.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments may be performed. The foregoing storage medium includes any medium that can store program code, such as a ROM, a random access memory RAM, a magnetic disk, or an optical disc.

In summary, what is described above is merely embodiments of the technical solutions of this application, but is not intended to limit the protection scope of this application. Any modification, equivalent substitution, improvement, and the like made based on the disclosure of this application shall fall within the protection scope of this application.

**Claims**

1. A target localization method, applied to a server, wherein the method comprises:

   receiving, by the server, a localization request sent by a first electronic device, wherein the localization request comprises a to-be-processed image;
   recognizing, by the server, a target in the to-be-processed image;
   searching, by the server, a pose estimation model library for a target pose estimation model corresponding to the target, wherein the pose estimation model library comprises pose estimation models respectively corresponding to a plurality of objects;
   obtaining, by the server, a pose of the target based on the to-be-processed image and the target pose estimation model; and
   sending, by the server, the pose of the target to the first electronic device.

2. The method according to claim 1, wherein before the searching, by the server, a pose estimation model library for a target pose estimation model corresponding to the target, the method further comprises:

   receiving, by the server, a three-dimensional model that corresponds to the target and that is sent by a second electronic device;
   rendering, by the server, the three-dimensional model corresponding to the target, to generate a plurality of training images; and
   training, by the server, an initial pose estimation model based on the plurality of training images, to obtain the target pose estimation model.

3. The method according to claim 1 or 2, wherein the recognizing, by the server, a target in the to-be-processed image comprises:

   extracting, by the server, a feature vector from the to-be-processed image;
   searching, by the server, a feature vector library for a feature vector having a highest similarity to the extracted feature vector, wherein the feature vector library comprises feature vectors respectively corresponding to identifiers of the plurality of objects; and
   determining, by the server, the target based on an identifier corresponding to the found feature vector.

4. The method according to any one of claims 1 to 3, wherein the target pose estimation model comprises a key point recognition model and a perspective-n-point algorithm, and the obtaining, by the server, a pose of the target based on the to-be-processed image and the target pose estimation model comprises:

   inputting, by the server, the to-be-processed image into the key point recognition model, to obtain two-dimensional coordinates of at least four key points corresponding to the target;
   determining, by the server, three-dimensional coordinates of the at least four key points based on the three-dimensional model corresponding to the target; and
   obtaining, by the server, the pose of the target based on the two-dimensional coordinates and the three-dimensional coordinates of the at least four key points by using the perspective-n-point algorithm.

5. The method according to any one of claims 1 to 4, wherein before the sending, by the server, the pose of the target to the first electronic device, the method further comprises:

   reprojecting, by the server based on the pose of the target, the three-dimensional model corresponding to the target onto the to-be-processed image, to obtain a rendered image;
   performing, by the server, M optimization processes, wherein M is a positive integer, and the optimization process comprises: the server calculates an optimized pose based on the rendered image and the to-be-processed image; and calculates a pose error based on the to-be-processed image and the optimized pose; and
   when the pose error is less than a preset error value, updating, by the server, the optimized pose to the pose of the target; or when the pose error is not less than a preset error value, updating the rendered image based on the optimized pose, and performing the optimization process.

6. The method according to any one of claims 1 to 5, wherein before the receiving, by the server, a localization request sent by a first electronic device, the method further comprises:

sending, to the first electronic device, the three-dimensional model corresponding to the target, wherein the three-dimensional model is used by the first electronic device to track the target based on the pose of the target.

7. A target localization method, applied to an electronic device, wherein the method comprises:

obtaining, by the electronic device, a to-be-processed image;
sending, by the electronic device, a localization request to a server, wherein the localization request comprises the to-be-processed image; the localization request is used to request to recognize a target in the to-be-processed image and obtain a first pose of the target in the to-be-processed image; and the first pose is obtained by the server based on a target pose estimation model that corresponds to the target and that is found from a pose estimation model library, and the pose estimation model library comprises pose estimation models respectively corresponding to a plurality of objects;
receiving, by the electronic device, the first pose sent by the server;
rendering, by the electronic device, virtual information on the to-be-processed image based on the first pose; and
displaying, by the electronic device, a rendered image.

8. The method according to claim 7, wherein after the receiving, by the electronic device, the first pose sent by the server, the method further comprises:

obtaining, by the electronic device, a current image frame, wherein the current image frame is an image obtained after the to-be-processed image is obtained; and
determining, by the electronic device, a second pose of the target in the current image frame based on the current image frame, a three-dimensional model corresponding to the target, and the first pose.

9. The method according to claim 8, wherein before the determining, by the electronic device, a second pose of the target in the current image frame based on the current image frame, a three-dimensional model corresponding to the target, and the first pose, the method comprises:

receiving, by the electronic device, an identifier that is of the target and that is sent by the server; and
obtaining, by the electronic device, the three-dimensional model from a storage based on the identifier of the target, wherein the three-dimensional model is stored in the storage after being obtained by the electronic device from the server.

10. The method according to claim 8 or 9, wherein the determining a second pose of the target in the current image frame comprises:

performing, by the electronic device, N optimization processes, wherein N is a positive integer, and the optimization process comprises: the electronic device calculates a pose correction amount based on an energy function, the three-dimensional model, and the second pose, updates the second pose based on the pose correction amount, and calculates an energy function value based on the energy function and a second pose; and when the energy function value meets a preset condition, outputting, by the electronic device, the second pose; or when the energy function value does not meet a preset condition, performing the optimization process.

11. The method according to claim 10, wherein the energy function comprises at least one of a gravity axis constraint term, a region constraint term, a pose estimation algorithm constraint term, or a regularization term constraint term, wherein the gravity axis constraint term is used to constrain an error of the second pose in a gravity axis direction; the region constraint term is used to constrain a contour error of the target in the second pose based on a pixel value of the current image frame; the pose estimation algorithm constraint term is used to constrain an error of the second pose based on an estimated pose, wherein the estimated pose is obtained based on the first pose and a pose that is of the electronic device and that is obtained based on a simultaneous localization and mapping algorithm; and the regularization term constraint term is used to constrain a contour error of the target in the second pose based on the three-dimensional model corresponding to the target.

12. The method according to any one of claims 7 to 11, wherein before the sending, by the electronic device, a localization request to a server, the method comprises:

displaying, by the electronic device, a user interface, wherein the user interface comprises a register control; and
when detecting a user operation for the register control, sending, by the electronic device to the server, the three-dimensional model corresponding to the target.

13. The method according to claim 12, wherein the three-dimensional model is obtained by the electronic device by receiving an external input or is generated by the electronic device based on a user operation.

14. A server, wherein the server comprises one or more processors and one or more memories, the one or more memories are coupled to the one or more processors, the one or more memories are configured to store computer program code, the computer program code comprises computer instructions, and when the one or more processors execute the computer instructions, the server is enabled to perform the method according to any one of claims 1 to 6.

15. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 7 to 13.

16. A computer program product comprising instructions, wherein when the computer program product runs on an electronic device, the electronic device is enabled to perform the method according to any one of claims 1 to 6 or 7 to 13.

17. A computer-readable storage medium, comprising instructions, wherein when the instructions are run on an electronic device, the electronic device is enabled to perform the method according to any one of claims 1 to 6 or 7 to 13.

18. A target localization system, wherein the target localization system comprises a server and an electronic device, the server is configured to perform the method according to any one of claims 1 to 6, and the electronic device is configured to perform the method according to any one of claims 7 to 13.

First electronic
device 101

Server 102

Second electronic device 103

FIG. 1

Electronic device 100

Antenna 1    Antenna 2

| Mobile communication module 2G/3G/4G/5G [150] | Wireless communication module BT/WLAN/GNSS/NFC/IR/FM [160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

External memory interface [120]

Processor [110]

USB interface [130]

Charging input

Charging management module [140]

Power management module [141]

Battery [142]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 2A

| Application layer | Camera | Gallery | Calendar | Phone | Maps | Navigation |
| | WLAN | Bluetooth | Music | Localization application | | ... |

| Application framework layer | Display manager | | Sensor manager | | Cross-device connection manager | |
| | Event manager | Activity manager | Window manager | Content provider |
| | View system | Resource manager | Notification manager | ... |

| System library | Surface manager | Three-dimensional graphics processing library | Media library | Android runtime |
| | Two-dimensional graphics engine | Event data | ... | |

| Kernel layer | Display driver | Camera driver | |
| | Audio driver | Sensor driver | ... |

FIG. 2B

```
┌─────────────────┐        ┌─────────────┐          ┌──────────────────┐
│ First electronic│        │   Server    │          │ Second electronic│
│     device      │        │             │          │     device       │
└─────────────────┘        └─────────────┘          └──────────────────┘
```

S301: Send a CAD model
correspond to a target

S302: Obtain, based on the CAD model corresponding to
the target, a point cloud model corresponding to the target

S303: Send the point
cloud model
corresponding to the target

S304: Render, based on an automatic rendering algorithm,
the point cloud model corresponding to the target, to
generate a plurality of training images of the target

S305: Obtain, based on the plurality of training images of
the target, a pose estimation model and a feature vector
that correspond to the target

S306: Send a localization
request, where the localization
request includes a to-be-
processed image

S307: Localize the target in the to-be-processed image
based on the point cloud model, the pose estimation model,
and the feature vector that correspond to the target, to
obtain a pose of the target

S308: Send the pose of the target

S309: Track the target based
on the pose of the target and
the point cloud model
corresponding to the target

FIG. 3

Target
(For example,
a vehicle)

Vehicle length:
4761 mm

Vehicle width:
1850 mm

A user holds an electronic
device

FIG. 4

```
┌─────────────────┐                              ┌─────────────────┐
│   Electronic    │                              │                 │
│     device      │                              │     Server      │
└─────────────────┘                              └─────────────────┘
         │                                                 │
┌────────────────────────────────────────────┐            │
│ S501: Shoot a to-be-processed image by using a camera in │
│ response to a user operation, where the to-be-processed  │
│ image includes a target                                  │
└────────────────────────────────────────────┘            │
         │                                                 │
         │   S502: Send a localization request,            │
         │   where the localization request includes       │
         │   the to-be-processed image                     │
         │ ───────────────────────────────────────────────►│
         │                                                 │
         │   ┌─────────────────────────────────────────────────────┐
         │   │ S503: Recognize a subject from the to-be-processed image │
         │   └─────────────────────────────────────────────────────┘
         │                                                 │
         │   ┌─────────────────────────────────────────────────────┐
         │   │ S504: Determine, from the to-be-processed image based on the │
         │   │ recognized subject, an image block in which the target is located │
         │   └─────────────────────────────────────────────────────┘
         │                                                 │
         │   ┌─────────────────────────────────────────────────────┐
         │   │ S505: Extract a feature vector from the image block in which │
         │   │ the target is located                                │
         │   └─────────────────────────────────────────────────────┘
         │                                                 │
         │   ┌─────────────────────────────────────────────────────┐
         │   │ S506: Obtain a target feature vector from a feature vector │
         │   │ retrieval library based on the extracted feature vector │
         │   └─────────────────────────────────────────────────────┘
         │                                                 │
         │   ┌─────────────────────────────────────────────────────┐
         │   │ S507: Obtain a target pose estimation model and a target point │
         │   │ cloud model based on the target feature vector       │
         │   └─────────────────────────────────────────────────────┘
         │                                                 │
         │   ┌─────────────────────────────────────────────────────┐
         │   │ S508: Obtain a pose of the target based on the image block in │
         │   │ which the target is located, the target pose estimation model, │
         │   │ and the target point cloud model                     │
         │   └─────────────────────────────────────────────────────┘
         │                                                 │
         │   S509: Send the pose of the target              │
         │ ◄───────────────────────────────────────────────│
         │                                                 │
┌────────────────────────────────────────────┐            │
│ S510: Track the target based on the pose of the target and the │
│ target point cloud model                                 │
└────────────────────────────────────────────┘            │
         │                                                 │
```

FIG. 5

FIG. 6

(a) To-be-processed image    (b)    (c) Image block in which the target is located

Recognize a target

Point B

Point A

Point B

Point A

FIG. 7

Feature vector corresponding
to an object A

Feature vector
retrieval library

Posture estimation model
corresponding to the object A

Server

Pose estimation
model library

Point cloud model
corresponding to the object A

Point cloud
model library

FIG. 8

Obtain a current image frame, where the current image frame
includes a target

Calculate a pose correction amount based on an energy
function and a pose of the target in the current image frame

Update the pose of the target in the current image frame
based on the pose correction amount

Calculate an energy function value based on the energy
function and a pose of the target in the current image frame

Determine
whether the energy function value meets a preset
condition

No

Yes

Output the pose of the target in the current image frame

FIG. 9

User interface 61

FIG. 10A

User interface 62

FIG. 10B

User interface 63

5G

08:00

Information about a recognizable target  *631*

Target name   *632*

CAD model of the target   Import   *633*

Related information

Related image   Import

*634*

Confirm to upload

*635*

FIG. 10C

User interface 64

FIG. 10D

**EP 4 513 448 A1**

| INTERNATIONAL SEARCH REPORT | International application No. |
|---|---|
| | **PCT/CN2023/092023** |

**A. CLASSIFICATION OF SUBJECT MATTER**

G06V 20/20(2022.01)i

According to International Patent Classification (IPC) or to both national classification and IPC

**B. FIELDS SEARCHED**

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

USTXT; VEN; CNABS; CNTXT; EPTXT; WOTXT; CNKI; IEEE: 目标, 定位, 图像, 图片, 服务器, 识别, 位姿, 估计, 模型, 发送, 渲染, 虚拟现实, 增强现实, object, location, image, server, recognition, pose, estimate, model, send, rendering, virtual reality, VR, augment reality, AR

**C. DOCUMENTS CONSIDERED TO BE RELEVANT**

| Category* | Citation of document, with indication, where appropriate, of the relevant passages | Relevant to claim No. |
|---|---|---|
| X | CN 110335351 A (BEIJING BAIDU NETCOM SCIENCE AND TECHNOLOGY CO., LTD.) 15 October 2019 (2019-10-15) description, paragraphs 38-81 | 1-18 |
| X | CN 112991551 A (SHENZHEN TETRAS.AI TECHNOLOGY CO., LTD.) 18 June 2021 (2021-06-18) description, paragraphs 70-175 | 1-18 |
| A | CN 110648361 A (SHENZHEN HUAHAN WEIYE TECHNOLOGY CO., LTD.) 03 January 2020 (2020-01-03) entire document | 1-18 |
| A | CN 113436251 A (NORTHEASTERN UNIVERSITY) 24 September 2021 (2021-09-24) entire document | 1-18 |
| A | CN 108346179 A (BEIJING XIAOMI MOBILE SOFTWARE CO., LTD.) 31 July 2018 (2018-07-31) entire document | 1-18 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 July 2023** | **30 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**41**

**INTERNATIONAL SEARCH REPORT**

| International application No. |
|---|
| **PCT/CN2023/092023** |

**C.    DOCUMENTS CONSIDERED TO BE RELEVANT**

| Category* | Citation of document, with indication, where appropriate, of the relevant passages | Relevant to claim No. |
|---|---|---|
| A | CN 111638793 A (ZHEJIANG SENSETIME TECHNOLOGY DEVELOPMENT CO., LTD.) 08 September 2020 (2020-09-08) entire document | 1-18 |
| A | CN 111694430 A (ZHEJIANG SENSETIME TECHNOLOGY DEVELOPMENT CO., LTD.) 22 September 2020 (2020-09-22) entire document | 1-18 |
| A | CN 112907658 A (HUAWEI TECHNOLOGIES CO., LTD.) 04 June 2021 (2021-06-04) entire document | 1-18 |
| A | US 2018082475 A1 (VERIZON PATENT AND LICENSING INC.) 22 March 2018 (2018-03-22) entire document | 1-18 |

**INTERNATIONAL SEARCH REPORT**
Information on patent family members

International application No.

**PCT/CN2023/092023**

| Patent document cited in search report | | | Publication date (day/month/year) | Patent family member(s) | | | Publication date (day/month/year) |
|---|---|---|---|---|---|---|---|
| CN | 110335351 | A | 15 October 2019 | CN | 110335351 | B | 24 March 2023 |
| CN | 112991551 | A | 18 June 2021 | | None | | |
| CN | 110648361 | A | 03 January 2020 | CN | 110648361 | B | 11 January 2022 |
| CN | 113436251 | A | 24 September 2021 | | None | | |
| CN | 108346179 | A | 31 July 2018 | CN | 108346179 | B | 03 August 2021 |
| CN | 111638793 | A | 08 September 2020 | | None | | |
| CN | 111694430 | A | 22 September 2020 | | None | | |
| CN | 112907658 | A | 04 June 2021 | | None | | |
| US | 2018082475 | A1 | 22 March 2018 | US | 10115236 | B2 | 30 October 2018 |

Form PCT/ISA/210 (patent family annex) (July 2022)

**EP 4 513 448 A1**

**Patent documents cited in the description**

- CN 202210508427